# EUROPEAN PATENT APPLICATION

(11) **EP 4 170 520 A1**
(43) Date of publication of application: **26.04.2023**
(21) Application number: 21825747.5
(22) Date of filing: 17.06.2021
(51) Int. Cl.: G06F 16/28, G06F 16/36

(54) **METHOD AND DEVICE FOR CONSTRUCTING KNOWLEDGE GRAPH, COMPUTER DEVICE, AND STORAGE MEDIUM**

(30) Priority: 17.06.2020 CN 202010556526; 17.06.2020 CN 202010555945
(71) Applicant: The 4th Paradigm Technology Co., Ltd, Beijing 100085 (CN)
(72) Inventor: CHEN, Wei, Beijing 100085 (CN); TAO, Ye, Beijing 100085 (CN); CHEN, Yuqiang, Beijing 100085 (CN); XIE, Jiayu, Beijing 100085 (CN)
(74) Representative: Müller Hoffmann & Partner
(86) International application number: PCT/CN2021/100709
(87) International publication number: WO 2021/254457

(57) **Abstract**

A method and device for constructing a knowledge graph, a computer device, and a storage medium, applied to the technical field of natural language processing. The method comprises: step 101, acquiring an original information data set uploaded by means of a data upload interface; step 102, outputting some information data in the original information data set to a user by means of a manual annotation interface, and acquiring first annotation result data completed by the user on the manual annotation interface; step 103, training a knowledge acquisition model on the basis of the first annotation result data to obtain a knowledge acquisition model satisfying a preset condition; step 104, extracting first graph knowledge from the original information data set by using the knowledge acquisition model; and step 105, constructing a knowledge graph on the basis of the first graph knowledge . The solution can improve the efficiency of knowledge graph construction, lower the knowledge graph construction threshold, and improve user experience.

## Description

This disclosure claims priorities to Chinese patent application No. 202010556526.3, entitled "METHOD, APPARATUS, DEVICE AND READABLE STORAGE MEDIUM FOR CONSTRUCTING KNOWLEDGE GRAPH" filed on June 17, 2020 and Chinese patent application No. 202010555945.5, entitled "METHOD, APPARATUS, DEVICE AND READABLE STORAGE MEDIUM FOR CONSTRUCTING KNOWLEDGE GRAPH" filed on June 17, 2020, the disclosure thereof is incorporated by reference into this disclosure.

### TECHNICAL FIELD

The present disclosure relates to the technical field of natural language processing, and in particular, to a method and a device for constructing a knowledge graph, a computer device, and a storage medium.

### BACKGROUND

With the continuous development of artificial intelligence technology, knowledge graph technology, one of important branches of artificial intelligence, has more and more applications in all walks of life.

In the prior art, in a process of constructing a knowledge graph, it is usually necessary to define a specific structure of the graph first, and then knowledge from a large amount of unstructured data and structured data is extracted into the form of triples, and then the knowledge of the triples is constructed into a knowledge graph. In the whole process, multiple natural language processing (NLP) experts or knowledge graph experts are needed to participate in the process.

Therefore, the method of constructing the knowledge graph with the existing technology requires the participation of the professional NLP experts or knowledge graph experts to complete, which has the defects of high difficulty and low efficiency.

Moreover, in the above construction process, after defining the specific structure of the graph, according to the defined knowledge type, an annotation tool is used in the unstructured data to make a lot of manual annotation on all types of knowledge, and then a model is trained. If the effect on an index is not satisfied, all the types are continued to arrange to be made annotation. After the model training index reaches expectations, the unstructured data for subsequent processing is automatically extracted into triples, and then the knowledge of the triples is constructed into a knowledge graph. In the whole process, for each article, all types should be annotated, and there are a large number of annotation, a difficulty for annotating, a high leakage rate, low efficiency, and due to the influence of the frequency of different knowledge types appearing in the text, the model index parameters acquired by training for each knowledge type are uneven, and the graph construction method cannot control and adjust the granularity of the knowledge type, which causes poor satisfaction of business needs.

### SUMMARY

The present disclosure provides a method and a device for constructing a knowledge graph, a computer device, and a storage medium, so as to solve at least one problem existing in the foregoing background.

In order to achieve the above object, in a first aspect, an embodiment of the present disclosure provides a method for constructing a knowledge graph, the method includes: acquiring an original information data set uploaded through a data upload port; outputting a part of information data in the original information data set to a user through a manual annotation interface, and acquiring first annotation result data completed by the user on the manual annotation interface; training a knowledge acquisition model based on the first annotation result data to obtain a knowledge acquisition model that satisfies a preset condition; extracting first graph knowledge from the original information data set by using the knowledge acquisition model; constructing a knowledge graph based on the first graph knowledge.

In a second aspect, an embodiment of the present disclosure provides an apparatus for constructing a knowledge graph, the apparatus includes: a first acquisition module configured to acquire an original information data set uploaded through a data upload port; a second acquisition module configured to output a part of information data in the original information data set to a user through a manual annotation interface, and acquire first annotation result data completed by the user on the manual annotation interface; a model training module configured to train a knowledge acquisition model based on the first annotation result data to obtain a knowledge acquisition model that satisfies a preset condition; a knowledge extraction module configured to extract first graph knowledge from the original information data set by using the knowledge acquisition model; a graph construction module configured to construct a knowledge graph based on the first graph knowledge.

In a third aspect, an embodiment of the present disclosure provides a method for constructing a knowledge graph, including: acquiring an original information data set; extracting graph knowledge from the original information data set by using a knowledge acquisition model; converting the graph knowledge extracted by using the knowledge acquisition model into a question to be confirmed, and pushing the question to at least one user for answering; constructing the knowledge graph based on answering results of the user.

In a fourth aspect, an embodiment of the present disclosure further discloses an apparatus for constructing a knowledge graph, including: a second acquisition module configured to acquire an original information data set; an extraction module configured to extract graph knowledge from the original information data set by using a knowledge acquisition model; a push module configured to convert the graph knowledge extracted by using the knowledge acquisition model into a question to be confirmed, and push the question to at least one user for answering; a construction module configured to construct the knowledge graph based on answering results of the user.

In a fifth aspect, an embodiment of the present disclosure provides a computer device, the computer device includes: a memory configured to store a computer program; a processor configured to implement the steps of the above method when the processor executes the computer program stored in the memory.

In a sixth aspect, an embodiment of the present disclosure provides a computer-readable storage medium having computer instructions stored thereon, and the computer instructions, when executed by a processor, implement the steps of the above method.

In a seventh aspect, an embodiment of the present disclosure further provides a computer program product, including computer program instructions, the computer program instructions, when run on a computer device, implement the steps of the above method.

The technical solution provided by present disclosure obtains the first annotation result data by manual annotation firstly, then trains the knowledge acquisition model based on the first annotation result data to obtain the knowledge acquisition model that satisfies the preset condition, and finally extracts the first graph knowledge from the original information data set based on the above knowledge acquisition model, and constructs the knowledge graph based on the first graph knowledge, thereby proposing a graph knowledge extraction solution that combines manual annotation and model extraction, wherein the manual annotation process may be completed by experts, and the knowledge acquisition model that satisfies the preset condition is obtained by training based on high-accuracy results of manual annotation, which can reduce the difficulty of constructing the knowledge graph, lower the threshold for constructing the knowledge graph, improve the efficiency of constructing the knowledge graph, and improve the experience of the knowledge graph construction process.

The technical solution provided by present disclosure converts the graph knowledge extracted by using the knowledge acquisition model into questions to be confirmed, pushes the questions to be confirmed to the user for answering, and constructs the knowledge graph based on the answering results of the user, thereby proposing a knowledge graph construction method of using the question-and-answer method for knowledge annotation. On one hand, the above technical solution of the embodiments of the present disclosure asks the graph knowledge to the user in the form of the question to be confirmed, which can reduce the difficulty for the user to annotate the knowledge, so that it does not require the excessive participation of professional NLP experts or knowledge graph experts, thereby reducing the difficulty of constructing the knowledge graph; on the other hand, the above technical solution is to use the knowledge acquisition model to extract the graph knowledge in combination with the way of ordinary users to answer, which reduces the user requirements, so that the required user resources may be found in a variety of ways, it may also improve the efficiency of constructing the knowledge graph and have strong industrial practicability.

### BRIEF DESCRIPTION

FIG. 1 is a schematic flowchart of a method for constructing a knowledge graph according to an embodiment of the present disclosure;
FIG. 2 is a schematic flowchart of another method for constructing a knowledge graph according to an embodiment of the present disclosure;
FIG. 3 is a schematic interface diagram of an entity type definition information input interface in an embodiment of the present disclosure;
FIG. 4 is a schematic interface diagram of a relationship type definition information input interface in an embodiment of the present disclosure;
FIG. 5 is a schematic interface diagram of an event type definition information input interface in an embodiment of the present disclosure;
FIG. 6 is a schematic interface diagram of a manual annotation interface in an embodiment of the present disclosure;
FIG. 7 is a schematic flowchart of yet another method for constructing a knowledge graph according to an embodiment of the present disclosure;
FIG. 8 is a schematic interface diagram of a user answering interface in an embodiment of the present disclosure;
FIG. 9 is a schematic diagram of an efficiency mode display interface provided in an embodiment of the present disclosure;
FIG. 10 is a schematic flowchart of determining whether a knowledge acquisition model satisfies a preset condition in an embodiment of the present disclosure;
FIG. 11 is a schematic flowchart of constructing a knowledge graph using structured data according to an embodiment of the present disclosure;
FIG. 12 is a schematic interface diagram of a structured data upload interface provided by an embodiment of the present disclosure;
FIG. 13 is a schematic interface diagram of a graph construction overview interface provided by an embodiment of the present disclosure;
FIG. 14 is a schematic structural diagram of an apparatus for constructing a knowledge graph according to an embodiment of the present disclosure;
FIG. 15 is a schematic structural diagram of another apparatus for constructing a knowledge graph according to an embodiment of the present disclosure;
FIG. 16 is a schematic structural diagram of yet another apparatus for constructing a knowledge graph according to an embodiment of the present disclosure;
FIG. 17 is a schematic flowchart of a method for constructing a knowledge graph according to another embodiment of the present disclosure;
FIG. 18 is a schematic flowchart of another method for constructing a knowledge graph according to another embodiment of the present disclosure;
FIG. 19 is a schematic flowchart of yet another method for constructing a knowledge graph according to another embodiment of the present disclosure;
FIG. 20 is a schematic flowchart of still another method for constructing a knowledge graph according to another embodiment of the present disclosure;
FIG. 21 is a schematic structural diagram of an apparatus for constructing a knowledge graph according to another embodiment of the present disclosure;
FIG. 22 is a schematic structural diagram of another apparatus for constructing a knowledge graph according to another embodiment of the present disclosure;
FIG. 23 is a schematic structural diagram of yet another apparatus for constructing a knowledge graph according to another embodiment of the present disclosure;
FIG. 24 is a schematic structural diagram of a computer device according to an embodiment of the present disclosure.

### DETAILED DESCRIPTION

In the embodiments of the present disclosure, knowledge graph involved may be defined as a graph-like organization of knowledge and data, and an entity node, an event node, and a relationship edge are its three main constituent elements, which may be referred to as a knowledge triple; in the knowledge graph, entity nodes and event nodes may be associated with different types of relationship edges. The entity node in the knowledge graph refers to a semantic word with a specific meaning, such as information including a person, a place, an institution, or a number. The event node in the knowledge graph refers to that one or more entity nodes with a specific meaning and a predefined event name are connected with a specific relational word to form a set of associated information, thereby describing a dynamic behavior. The followings are explained by financing events and movie release events respectively.

For a financing event, it may include:
financing event - financing time - 2020.5.20;
financing event - financing party - XXX company;
financing event - financing amount - $1 Billion;
financing event - investor- XXX company.
For a film and television work release event, it may include:
film and television work release event - film and television work title - work title;
film and television work release event - release time - time;
film and television work release event - release location - location;
film and television work release event - director - name;
film and television work release event - star - person name.

For a specific film and television work release event 01, relationship edges may include may include:
film and television work release event 01 - film and television work name - Iron Man;
film and television works release event 01 - release time - April 30, 2008;
film and television work release event 01 - release location - China;
film and television work release event 01 - director - Jon Favreau;
film and television work release event 01 - star - Robert Downey Jr;
film and television work release event 01 - star - Gwyneth Paltrow;
film and television work release event 01 - star - Terrence Howard;
film and television work release event 01 - star - Jeff Bridges.

According to the prior art, in a process of constructing the above type of knowledge graph, especially in a process of constructing the knowledge graph based on unstructured data, it requires the participation of professional NLP experts or knowledge graph experts to complete, which is difficult and inefficient. The technical solution for constructing a knowledge graph provided by the embodiments of the present disclosure obtains first annotation result data by manual annotation firstly, then trains a knowledge acquisition model based on the first annotation result data to obtain a knowledge acquisition model that satisfies a preset condition, and finally extracts first graph knowledge from an original information data set based on the above knowledge acquisition model, and constructs the knowledge graph based on the first graph knowledge, thereby proposing a graph knowledge extraction solution that combines manual annotation and model extraction, wherein the manual annotation process may be completed by experts, and the knowledge acquisition model that satisfies the preset condition is obtained by training based on high-accuracy results of manual annotation, which can reduce the difficulty of constructing the knowledge graph, lower the threshold for constructing the knowledge graph, improve the efficiency of constructing the knowledge graph, and improve the experience of the knowledge graph construction process.

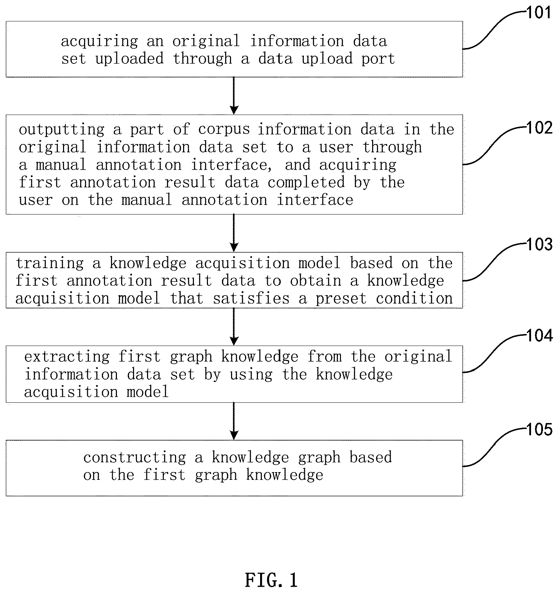

FIG. 1 is a schematic flowchart of a method for constructing a knowledge graph according to an embodiment of the present disclosure. As shown in FIG. 1, the method includes the following steps.

Step 101, an original information data set uploaded through a data upload port is acquired.

The original information data set in this step is original materials for constructing a knowledge graph, and a corresponding graph knowledge may be obtained by analyzing and extracting the original information data set. The specific type of the original information data set may be various, for example, it may include at least one of an original corpus data set, an original picture data set and an original video data set, which may be selected according to specific business scenarios.

Step 102, a part of corpus information data in the original information data set is output to a user through a manual annotation interface, and first annotation result data completed by the user on the manual annotation interface is acquired.

The technical solution provided by the embodiment of the present disclosure is a technical solution combining manual annotation and model extraction, wherein the manual annotation may be output to the user through the manual annotation interface, and the above user may be a business expert of the knowledge graph, etc. The user completes the first annotation result data on the manual annotation interface. The first annotation result data has high reliability and may be used as sample data for subsequent training of a knowledge acquisition model.

Step 103, a knowledge acquisition model is trained based on the first annotation result data to obtain a knowledge acquisition model that satisfies a preset condition.

Based on the first annotation result data acquired in the above step, a knowledge acquisition model may be further trained to obtain a knowledge acquisition model that satisfies a preset condition, and the preset condition may be determined according to performance parameters of the knowledge acquisition model. The parameters include, but not limited to, parameters such as an accuracy, a recall, a F 1 value and the like of the knowledge acquisition model.

Step 104, first graph knowledge is extracted from the original information data set by using the knowledge acquisition model.

After the knowledge acquisition model that satisfies the preset condition is obtained in step 103, that is, the knowledge acquisition model may already meet the business requirements, in this step, the original information data set may be input into the knowledge acquisition model as input data, so that the knowledge acquisition model extracts the first graph knowledge from the original information data set, and the knowledge acquisition model may extract the first graph knowledge from all or part of the original information data set input in step 101, in this step.

Step 105, a knowledge graph is constructed based on the first graph knowledge.

In this step, a knowledge graph is constructed based on the above first graph knowledge, wherein the knowledge graph may include the above content such as entity nodes, relationship edges, and events.

The technical solution for constructing a knowledge graph provided by the embodiment of the present disclosure proposes a graph knowledge extraction solution that combines manual annotation and model extraction, wherein the manual annotation process may be completed by experts, and a knowledge acquisition model that satisfies a preset condition is obtained by training based on high-accuracy results of manual annotation, and then the knowledge acquisition model is used to extract graph knowledge, which can reduce the difficulty of constructing the knowledge graph, lower the threshold for constructing the knowledge graph, improve the efficiency of constructing the knowledge graph, and improve the experience of the knowledge graph construction process.

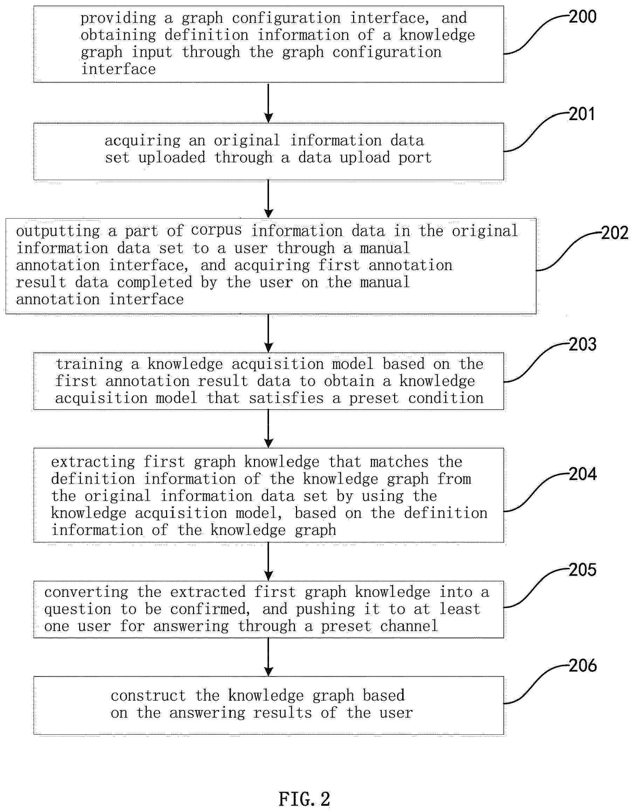

In some embodiments, the user may also configure the knowledge graph, that is, he/she may define a type of graph knowledge included in the knowledge graph and a specific project content included in each type of graph knowledge. For different business scenarios, structures, types, and project content included of knowledge graphs may also be different. FIG. 2 is a schematic flowchart of another method for constructing a knowledge graph in an embodiment of the present disclosure. For steps 201 to 203 in the embodiment shown in FIG. 2, reference may be made to the above steps 101 to 103, as shown in FIG. 2, the method further includes:
Step 200, a graph configuration interface is provided, and definition information of a knowledge graph input through the graph configuration interface is obtained.

In this step, when acquiring the definition information of the knowledge graph, by providing a graph configuration interface, the definition information is input by a user through the graph configuration interface. When the knowledge graph includes entity nodes, event nodes and relationship edges, the acquisition of the definition information of the knowledge graph may include acquiring at least one of entity type definition information, event type definition information and relationship type definition information of the knowledge graph.

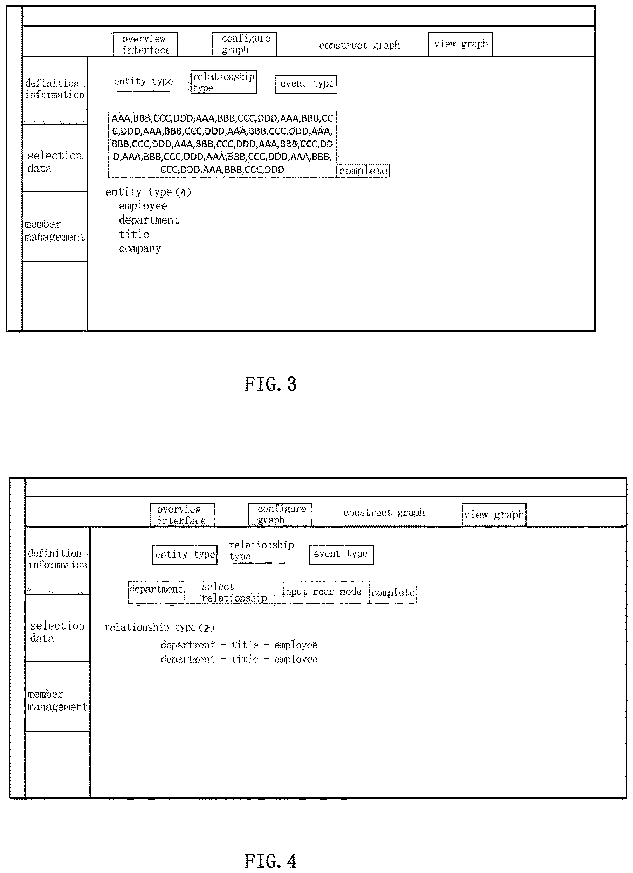

For graph knowledge of the entity type, the input definition information may be summary information including specific entity nodes, such as a time, company, actor, etc., for an input interface for the entity type definition information may refer to FIG. 3. In the interface shown in FIG. 3, the input definition information includes names of the entity nodes, such as an employee or person, department, title, company, date, etc. In the embodiment of the present disclosure, the graph knowledge of the entity type corresponds to nodes in the graph, and in some cases, it may also be referred to as a node type.

For graph knowledge of the relationship type, the input definition information may be summary information including specific relationships, such as "actor - act - work", "work - release - time", etc., and an input interface for the relationship type definition information may refer to FIG. 4, the input definition information includes names of the relationship edges, such as " department - title - employee" etc.

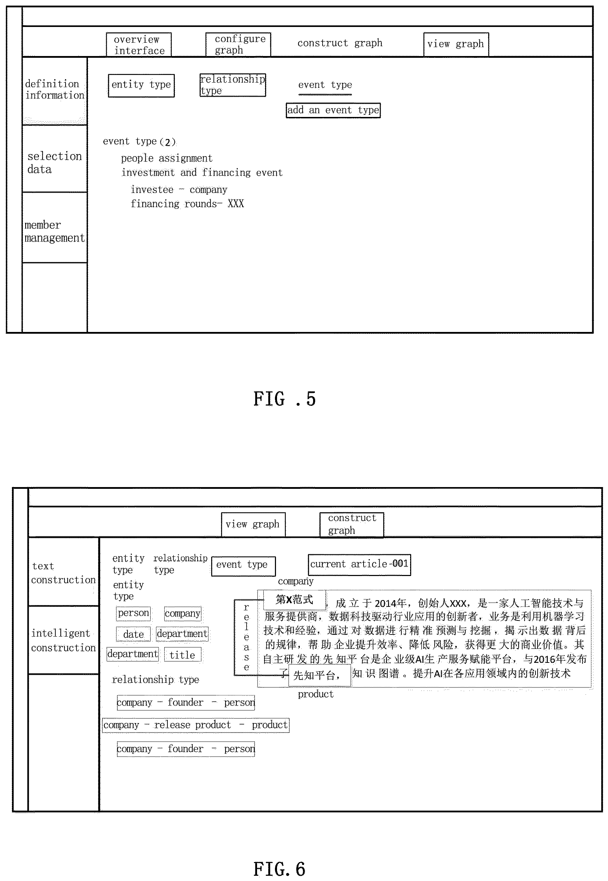

For graph knowledge of the event type, the input definition information may be summary information including specific events, the summary information may include event names, and relationships within the events, for example, for an investment and financing event, a relationship may include "investor - company", "investee - company", "investment time - time" and "financing rounds - rounds", etc. For an input interface of the event type definition information may refer to FIG 5.

In the embodiment of the present disclosure, the above definition information determines a type and a content of graph knowledge included in the subsequent knowledge graph. Therefore, graph knowledge that matches the above definition information may also be annotated during manual annotation, that is, the above manual annotation interface may be provided with an annotation prompt control that matches the definition information of the knowledge graph. FIG. 6 is a schematic interface diagram of a manual annotation interface in an embodiment of the present disclosure. In the interface shown in FIG. 6, graph knowledge extraction is performed for a segment of introduction data of "XX Company" by a manual annotation method, wherein the left displays the annotation prompt control that matches the definition information, for example, for the entity type, controls such as person, department, company, date, and title are included, and for the relationship type, controls such as "company - founder - person", "company - release product - product" are included.

The annotation prompt control may be used to prompt the user for annotation and facilitate the user to perform annotation operations, and the user may perform annotation based on the annotation prompt control to obtain annotation result data. For example, when performing manual annotation, the user may select a certain annotation prompt control in advance, such as selecting a person control, it means that the user will annotate a person, and when the user annotates, if the user delineates a certain word in the original data information, the word may be automatically annotated with a "person" label, that is, the word is automatically annotated as a person.

After the definition information of the knowledge graph is acquired, in addition to the above manual annotation stage where the graph knowledge matching the definition information may be annotated to generate the first annotation result data, in a model extraction stage, the above definition information of the knowledge graph may also be used to extract the graph knowledge, as shown in FIG. 2, the step of extracting the first graph knowledge by using the knowledge acquisition model may specifically include:

Step 204, first graph knowledge that matches the definition information of the knowledge graph is extracted from the original information data set by using the knowledge acquisition model, based on the definition information of the knowledge graph.

In some embodiments, in the above process of constructing the knowledge graph based on the first graph knowledge, the first graph knowledge may be converted into a question to be confirmed, and then pushed to the user for answering, and manual annotation is continued to make on the graph knowledge extracted through the knowledge acquisition model by the user, but this type of manual annotation generally has lower requirements for the user. Referring to FIG. 2, the step of constructing the knowledge graph includes:
Step 205, the extracted first graph knowledge is converted into a question to be confirmed, and pushed to at least one user for answering through a preset channel.

In this step, on the basis of extracting the first graph knowledge by using the knowledge extraction model, the above first graph knowledge is further converted into the question to be confirmed, and the above question to be confirmed is pushed to the user through at least one preset channel for answering, because it is a question-and-answer question, and the user only needs to provide a certain or uncertain answering result, the requirement for the user is low, and it may be realized by ordinary users who do not have a lot of professional knowledge; and the above question to be confirmed may be opened to the outside world and implemented by connecting different application scenarios or platforms. After the above answering results of ordinary users are collected, they may be used as annotated first graph knowledge.

Step 206, the knowledge graph is constructed based on the answering results of the user.

After acquiring the answering results of the user for the question to be confirmed through various application scenarios or platforms, the knowledge graph may be constructed based on the above answering results.

In the embodiment of the present disclosure, the first graph knowledge extracted by the knowledge extraction model is converted into questions to be confirmed, and the above questions are connected to different application scenarios or platforms, so that ordinary users can answer and the first graph knowledge is manually annotated. The above technical solution of the embodiment of the present disclosure not only reduce the difficulty of constructing the knowledge graph, but also improve the efficiency of constructing the knowledge graph.

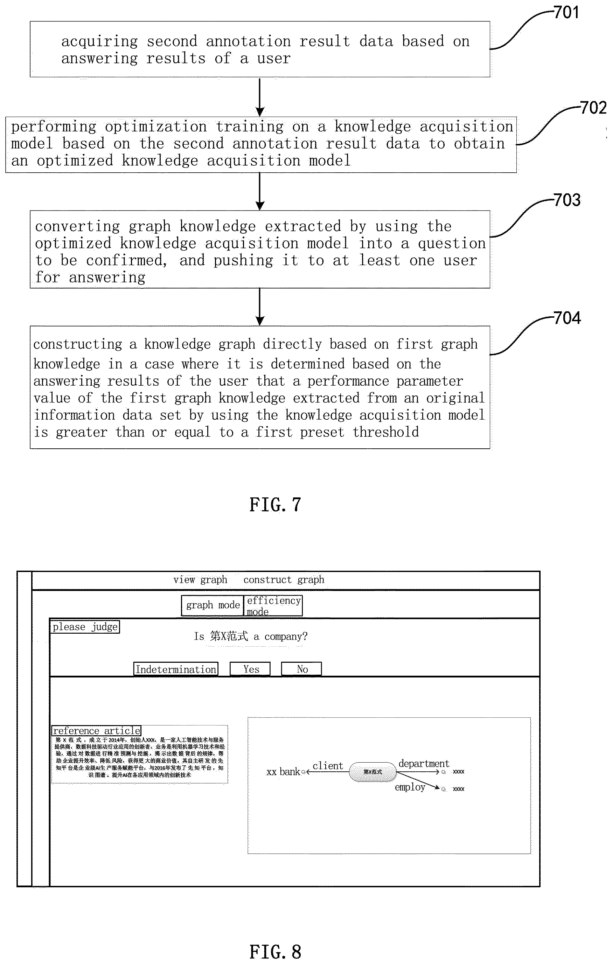

In some embodiments, the reliability of the first graph knowledge confirmed by the user's answer is relatively high, and it may be considered as sample data to train the knowledge acquisition model, so as to improve the performance of the knowledge acquisition model. FIG. 7 is a schematic flowchart of yet another method for constructing a knowledge graph according to an embodiment of the present disclosure. On the basis of the method shown in FIG. 2, as shown in FIG. 7, the method may further include:
Step 701, second annotation result data is acquired based on the answering results of the user.

In this step, considering that the answering results of the user are equivalent to results of re-correcting the graph knowledge extracted by the knowledge acquisition model, in this step, the second annotation result data is acquired by using the results, so as to realize re-optimization of the knowledge acquisition model. It may be regarded as a kind of optimization training data.

Step 702, optimization training is performed on the knowledge acquisition model based on the second annotation result data to obtain an optimized knowledge acquisition model.

After the knowledge acquisition model is optimization trained through the above second annotation result data, the performance of the knowledge acquisition model may be significantly improved, for example, the performance of the knowledge acquisition model in terms of the accuracy, the recall, the F1 and the like may be improved.

Step 703, graph knowledge extracted by using the optimized knowledge acquisition model is converted into a question to be confirmed, and pushed to at least one user for answering.

For the optimized knowledge acquisition model, the extracted first graph knowledge may be converted into questions to be confirmed in the manner shown in the embodiment shown in FIG. 2, and then the above questions to be confirmed are pushed to the user for answering.

As an implementation solution of cyclic optimization, in the embodiment of the present disclosure, the optimization training data may be generated based on the answering results of the user for many times, and the knowledge acquisition model may be optimization trained, that is, the above steps 701 to 703 are repeatedly performed.

In the embodiment of the present disclosure, the answering results that are confirmed by the user may be used as the optimization training data to continuously optimize the knowledge acquisition model, and then more accurate questions are generated and pushed to the user for answering. In some embodiments, if it is determined that a performance parameter value of the graph knowledge which is extracted from the original information data set by using the knowledge acquisition model reaches a certain threshold after analyzing the answering results of the user, that is, if it is greater than or equal to a first preset threshold, it may be considered to store the above first graph knowledge in a database, and directly use it to construct the knowledge graph, that is, in the above embodiment shown in FIG. 7, it further includes:
Step 704, the knowledge graph is constructed directly based on first graph knowledge in a case where it is determined based on the answering results of the user that a performance parameter value of the first graph knowledge extracted from the original information data set by using the knowledge acquisition model is greater than or equal to a first preset threshold.

In the embodiment of the present disclosure, the performance parameter value may include parameters that measure the performance of the knowledge acquisition model, such as the accuracy, the recall and the F1 value, or other numerical values calculated according to the above parameters, wherein the F1 value is a harmonic mean of the accuracy and the recall.

In some embodiments, for step 205 in the above embodiment shown in FIG. 2 and step 703 in the above embodiment shown in FIG. 7, when pushing the question to be confirmed to the user, a user answering interface may be provided, the user answering interface displays the question to be confirmed and an answer submission control.

The user answering interface may be referred to as shown in FIG. 8, where the question to be confirmed "Is 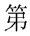 X 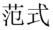 a company?" and three answer submission controls "Indetermination", "Yes" and "No" are displayed on the user answering interface, the user can submit the answering result by clicking the control.

Optionally, one or all of the following contents may also be displayed on the above user answering interface:
First, source information data of the first graph knowledge corresponding to the question to be confirmed is displayed. The source information data may be a part of the original information data set. In the embodiment shown in FIG. 8, it is a reference article. The article is the source information data for the above question to be confirmed "Is 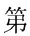 X 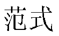 a company?";
Second, the knowledge graph created based on the first graph knowledge corresponding to the question to be confirmed is displayed. As shown in FIG. 8, the knowledge graph created based on the first graph knowledge corresponding to the above question to be confirmed "Is 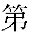 X 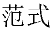 a company?" is shown.

For the display method of the above question to be confirmed, only one question to be confirmed is displayed at a time, and the knowledge graph corresponding to the question to be confirmed is displayed at the same time, which may be regarded as a graph mode display method. Different from the graph mode display method, the embodiment of the present disclosure also provides an efficiency mode display method.

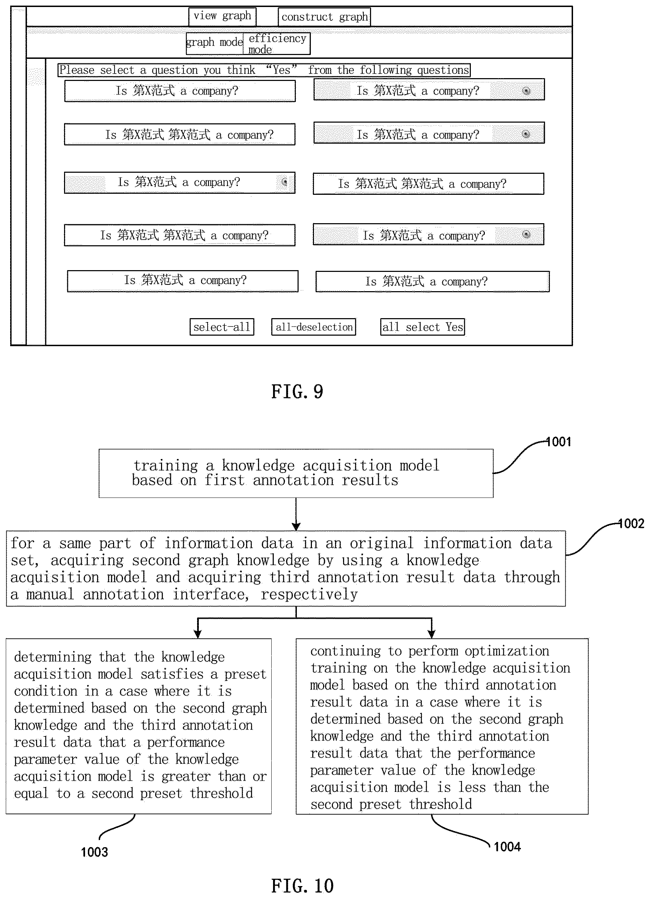

In the efficiency mode display mode, at least two questions to be confirmed may be displayed on the user answering interface, and the above answer submission control includes a batch selection control. FIG. 9 is a schematic diagram of an efficiency mode display interface provided in an embodiment of the present disclosure. As shown in FIG. 9, a plurality of questions to be confirmed are displayed on the user answering interface, and the user can select each question to be confirmed individually, and the answering result may be given by a select-all control, an all-deselection control, an inverse-selection control and a partial multiple-selection control, which can significantly improve the efficiency of graph construction.

In addition, in this efficiency mode, according to how many contents are displayed on the user answering interface, it may be selectively determined whether to display the source information data; for example, when there are many questions to be confirmed, the source information data is no longer displayed, FIG. 9 does not show the reference article in FIG. 8, and the user need to rely on his/her own common sense to judge whether the question to be confirmed is correct.

In some embodiments, the acquisition of the knowledge acquisition model that satisfies the preset conditions in the above step 103 may be that by using the same part of information data in the original information data set, comparation is made by using second graph knowledge acquired through using the knowledge acquisition model and third annotation result data acquired through manual annotation respectively, to determine whether the performance parameter value of the knowledge acquisition model satisfies the preset condition. FIG. 10 is a schematic flowchart of determining whether a knowledge acquisition model satisfies a preset condition in an embodiment of the present disclosure, as shown in FIG. 10, including the following steps:
Step 1001, a knowledge acquisition model is trained based on first annotation results.

Step 1002, for a same part of information data in an original information data set, second graph knowledge is acquired by using a knowledge acquisition model and third annotation result data is acquired through a manual annotation interface, respectively.

Step 1003, it is determined that the knowledge acquisition model satisfies a preset condition in a case where it is determined based on the second graph knowledge and the third annotation result data that a performance parameter value of the knowledge acquisition model is greater than or equal to a second preset threshold.

Through the above method, the performance of the knowledge acquisition model may be controlled, and only when the performance of the knowledge acquisition model satisfies the requirements, the first graph knowledge acquired by the knowledge acquisition model is used to construct the knowledge graph.

Furthermore, it may further include the following steps:
Step 1004, optimization training is continued to perform on the knowledge acquisition model based on the third annotation result data in a case where it is determined based on the second graph knowledge and the third annotation result data that the performance parameter value of the knowledge acquisition model is less than the second preset threshold.

That is, for the knowledge acquisition model whose performance parameter values cannot satisfy the requirements, it means that the reliability of the model is not enough, and it needs to be continued to be optimized. The above third annotation result data is used as manual annotation data, which has high reliability. Thus, in this step, the knowledge acquisition model may be continued to be optimization trained by using the third result annotation data.

In the embodiment of the present disclosure, the performance parameter value may include parameters that measure the performance of the knowledge acquisition model, such as the accuracy, the recall, the F1 value and the like, or other numerical values calculated according to the above parameters, wherein the F1 value is a harmonic mean of the accuracy and the recall.

In the above embodiments of the present disclosure, the acquisition of the original information data set uploaded through the data port may be to provide a data upload interface, and acquire the original information data set uploaded through the data upload interface, and the original information data set includes at least one of an original corpus data set, an original picture data set and an original video data set, and alternatively, the original corpus data set includes unstructured text data. The unstructured text data may cover most data forms, so that the embodiments of the present disclosure have a strong scope of application.

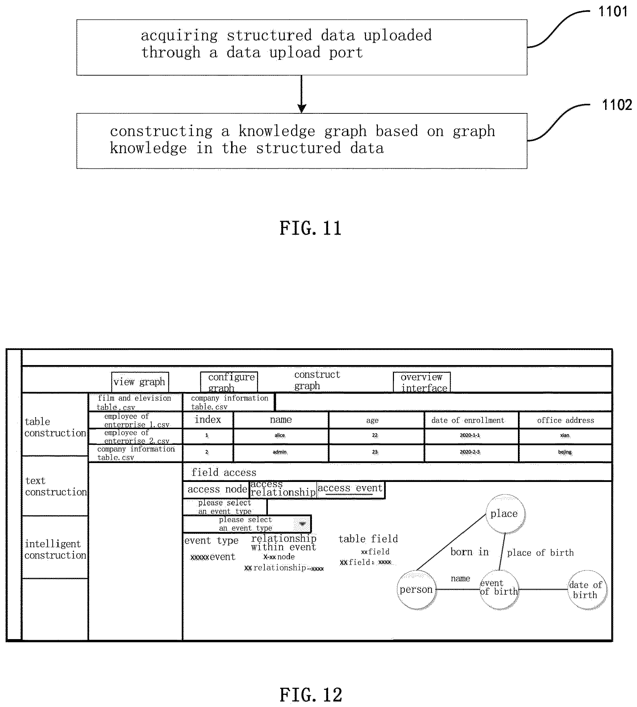

In some embodiments, in addition to constructing the knowledge graph by using the above unstructured data, structured data may also be used to construct the knowledge graph. FIG. 11 is a schematic flowchart of constructing a knowledge graph using structured data in one embodiment of the present disclosure, as shown in FIG. 11, the method may also include the following steps:
Step 1101, structured data uploaded through a data upload port is acquired.

The data upload port may include various forms, for example, a data upload interface may be provided to obtain structured data uploaded through the data upload interface; furthermore, for the structured data, its prominent feature is that it has relatively fixed fields, thus it may be considered that the structured data is directly used to form the knowledge graph. Therefore, when acquiring the structured data, fields in structured data corresponding to a type of graph knowledge in the knowledge graph to be constructed is further acquired, for example, when the knowledge graph includes graph knowledge of an entity type, a relationship type and an event type, it is necessary to specify its corresponding content in the structured data. For example, for a relationship of "company - founder - person", it is necessary to specify corresponding fields of "company" and "person" in structured data; after the above relationship is created, graph knowledge may be automatically introduced from the structured data.

Step 1102, a knowledge graph is constructed based on graph knowledge in the structured data.

FIG. 12 is a schematic interface diagram of a structured data upload interface provided by an embodiment of the present disclosure. As shown in FIG. 12, a company information table in csv format is uploaded, a field access part is used to enter fields in structured data corresponding to a type of graph knowledge, for example, enter a corresponding relationship between two fields of a name and an age in the "company information table.csv" and an entity type in the knowledge graph. In addition, the knowledge graph generated based on the structured data may be continued to be displayed on this interface.

In some embodiments, a graph construction overview interface may also be provided, and the overview interface may implement at least one of the following functions: on the one hand, a priority of first graph knowledge of each type may be acquired through the overview interface, and then a question to be confirmed is pushed with reference to the priority when pushing the question; on the other hand, some related information in the graph construction process is displayed through this interface, such as construction information, performance parameter information, etc.

For the above first aspect, if the above first graph knowledge includes at least one of an entity type, a relationship type and an event type, the graph construction method may further include:
acquiring a priority of first graph knowledge of each type input through the graph construction overview interface.

In the above disclosed embodiments, the pushing, through the preset channel, the question to the at least one user for answering may specifically include:
pushing, through the preset channel, the question to be confirmed corresponding to the first graph knowledge of each type based on the priority.

For the above second aspect, the above method for constructing the knowledge graph may further include at least one of:
acquiring performance parameter information of the knowledge acquisition model, and displaying it on the graph construction overview interface, wherein the performance parameter information includes at least one of an accuracy, a recall and a F1; and/or,
acquiring construction information of the first graph knowledge of each type of the knowledge graph, and displaying it on the graph construction overview interface, wherein the construction information includes a constructor, a number of times of construction, and a construction accuracy.

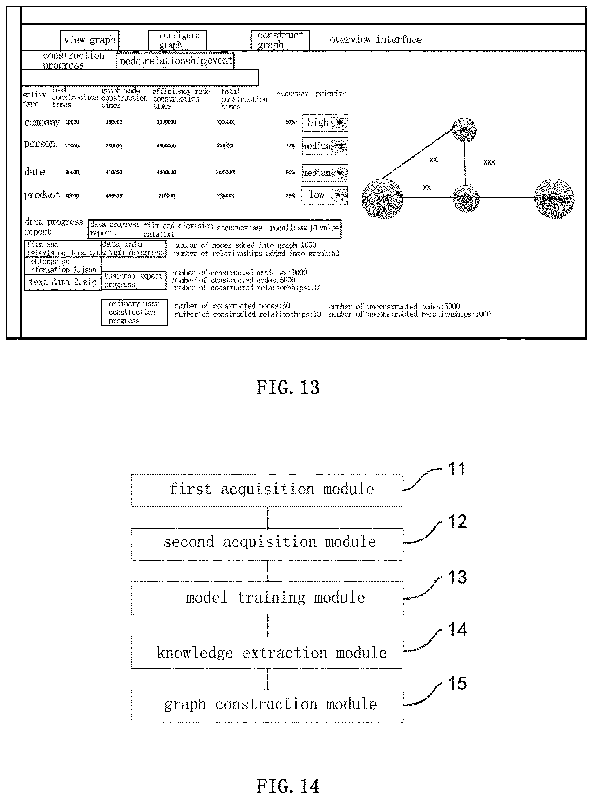

FIG. 13 is a schematic interface diagram of a graph construction overview interface provided by an embodiment of the present disclosure. As shown in FIG. 13, it is divided according to a type of first graph knowledge, such as an entity type, a relationship type and an event type, provides construction information corresponding to first graph knowledge of each type, such as text construction times, graph mode construction times, efficiency mode construction times, and accuracy, etc., where the text construction is a process that annotation may be made by business experts to obtain first annotation result data in the above embodiment, which may refer to the manual annotation interface in FIG. 6; the graph mode construction may refer to the user answering interface shown in FIG. 8; the efficiency mode construction may refer to the user answering interface shown in FIG. 9. In addition, a priority of graph knowledge of each type may be designated. The priority provides a corresponding selection function. By selecting a high, medium or low, a probability that a question corresponding to first graph knowledge of one type is pushed may be set.

Furthermore, in the dimension of the input original information data set, the corresponding performance parameter information of the knowledge acquisition model may be viewed. The performance parameter information includes at least one of an accuracy, a recall and a F1, and is shown on the construction overview interface, the above performance parameter information may correspond to different data sets in the original information data set, or may correspond to the entire data set, which is not limited in this embodiment of the present disclosure.

FIG. 14 is a schematic structural diagram of an apparatus for constructing a knowledge graph according to an embodiment of the present disclosure. As shown in FIG. 14, the apparatus includes a first acquisition module 11, a second acquisition module 12, a model training module 13, and a knowledge extraction module 14 and graph construction module 15.

Herein, the first acquisition module 11 is configured to acquire an original information data set uploaded through a data upload port; the original information data set is original material configured to construct the knowledge graph, and through analysis and extraction of the original information data set, corresponding graph knowledge may be acquired. The specific type of the original information data set may be various, for example, it may include at least one of an original corpus data set, an original picture data set and an original video data set, which may be selected according to specific business scenarios.

The second acquisition module 12 is configured to output a part of corpus information data in the original information data set to a user through a manual annotation interface, and obtain first annotation result data completed by the user on the manual annotation interface.

The technical solution provided by the embodiment of the present disclosure is a technical solution combining manual annotation and model extraction, wherein the manual annotation may be output to the user through the manual annotation interface, and the above user may be a business expert of knowledge graph, etc. The user completes the first annotation result data on the manual annotation interface. The first annotation result data has high reliability and may be used as sample data for subsequent training of a knowledge acquisition model.

The model training module 13 is configured to train a knowledge acquisition model based on the first annotation result data to obtain a knowledge acquisition model that satisfies a preset condition.

Based on the first annotation result data acquired by the second acquisition module 12, the knowledge acquisition model may be further trained to obtain a knowledge acquisition model that satisfies the preset condition, wherein the preset condition may be determined according to performance parameters of the knowledge acquisition model, the above parameters include, but not limited to, parameters such as an accuracy, a recall, a F1 value and the like of the knowledge acquisition model.

The knowledge extraction module 14 is configured to extract first graph knowledge from the original information data set by using the knowledge acquisition model.

After the model training module obtains the knowledge acquisition model that satisfies the preset condition, that is, the knowledge acquisition model may already meet the business requirements, in this step, the original information data set may be input into the knowledge acquisition model as input data, so that the knowledge acquisition model may extract the first graph knowledge from the original information data set. In this embodiment, the knowledge acquisition model may extract the first graph knowledge from all or part of the original information data set acquired by the first acquisition module 11.

The graph construction module 15 is configured to construct a knowledge graph based on the first graph knowledge. This module constructs the knowledge graph based on the above first graph knowledge, wherein the knowledge graph may include the above content such as entity nodes, relationship edges and events.

The technical solution for constructing a knowledge graph provided by the embodiment of the present disclosure proposes a graph knowledge extraction solution that combines manual annotation and model extraction, wherein the manual annotation process may be completed by experts, and a knowledge acquisition model that satisfies a preset condition is obtained by training based on high-accuracy results of manual annotation, and then the knowledge acquisition model is used to extract graph knowledge, which can reduce the difficulty of constructing the knowledge graph, lower the threshold for constructing the knowledge graph, improve the efficiency of constructing the knowledge graph.

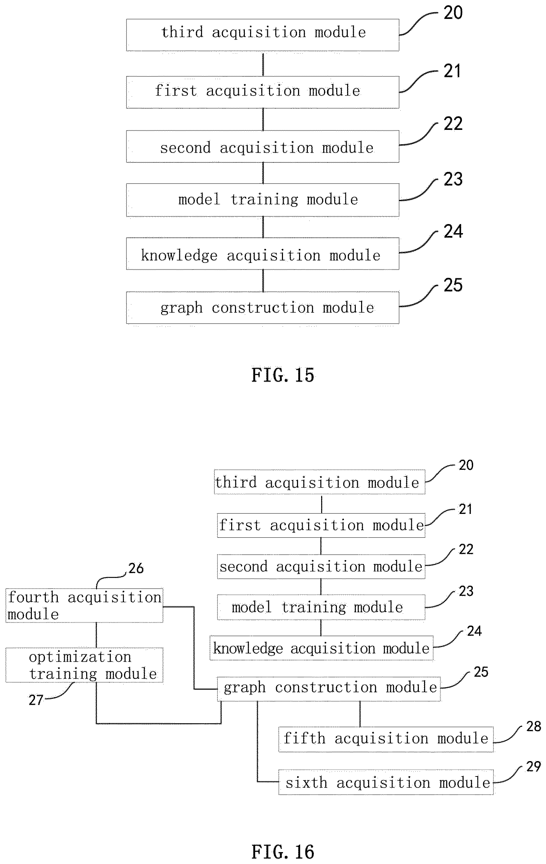

In some embodiments, the user may also configure the knowledge graph, that is, he/she may define a type of graph knowledge included in the knowledge graph and a specific project content included in each type of graph knowledge. For different business scenarios, structures, types, and project content included of knowledge graphs may also be different. FIG. 15 is a schematic structural diagram of another apparatus for constructing a knowledge graph provided by an embodiment of the present disclosure. A first acquisition module 21, a second acquisition module 22 and a model training module 23 in the embodiment shown in FIG. 15 may refer to corresponding modules in the embodiment shown in FIG. 14, as shown in FIG. 15, the apparatus further includes:

The third acquisition module 20 configured to provide a graph configuration interface, and obtain definition information of the knowledge graph input through the graph configuration interface.

This module provides the graph configuration interface for the user to input the definition information of the knowledge graph through the graph configuration interface when acquiring the definition information. Specifically, when the knowledge graph includes entity nodes, event nodes and relationship edges, the acquiring the definition information of the knowledge graph may include acquiring at least one of entity type definition information, event type definition information and relationship type definition information of the knowledge graph.

For graph knowledge of the entity type, the input definition information may be summary information including specific entity nodes, such as a time, company, actor, etc., for an input interface for the entity type definition information may refer to FIG. 3. In the interface shown in FIG. 3, the input definition information includes names of the entity nodes, such as an employee or person, department, title, company, date, etc.

For graph knowledge of the relationship type, the input definition information may be summary information including specific relationships, such as "actor - act - work", "work - release - time", etc., and an input interface for the relationship type definition information may refer to FIG. 4, the input definition information includes names of the relationship edges, such as " department- employee- title " etc.

For graph knowledge of the event type, the input definition information may be summary information including specific events, the summary information may include event names, and relationships within the events, for example, for an investment and financing event, a relationship may include "investor - company", "investee - company", "investment time - time" and "financing rounds- rounds", etc. For an input interface of the event type definition information may refer to FIG. 5. In the embodiment of the present disclosure, the above definition information determines a type and a content of graph knowledge included in the subsequent knowledge graph. Therefore, graph knowledge that matches the above definition information may also be annotated during manual annotation, that is, the above manual annotation interface may be provided with an annotation prompt control that matches the definition information of the knowledge graph. FIG. 6 is a schematic interface diagram of a manual annotation interface in an embodiment of the present disclosure. In the interface shown in FIG. 6, graph knowledge extraction is performed for a segment of introduction data of " 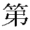 X 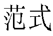 " by a manual annotation method, wherein the left displays the annotation prompt control that matches the definition information, for example, for the entity type, controls such as person, department, company, date, and title are included, and for the relationship type, controls such as "company - founder - person", "company - release product - product" are included.

After the definition information of the knowledge graph is acquired, in addition to the above manual annotation stage where the graph knowledge matching the definition information may be annotated to generate the first annotation result data, in a model extraction stage, the above definition information of the knowledge graph may also be used to extract the graph knowledge, as shown in FIG. 15, the knowledge acquisition module 24 is specifically configured to extract the first graph knowledge that matches the definition information of the knowledge graph from the original information data set by using the knowledge acquisition model, based on the definition information of the knowledge graph.

In some embodiments, in the above process of constructing the knowledge graph based on the first graph knowledge, the first graph knowledge may be converted into a question to be confirmed, and then pushed to the user for answering, and manual annotation is continued to make on the graph knowledge extracted through the knowledge acquisition model by the user, but this type of manual annotation generally has lower requirements for the user. Referring to FIG. 15, the graph construction module 25 is specifically configured to convert the extracted first graph knowledge into a question to be confirmed, and push it to at least one user for answering through a preset channel.

On the basis of extracting the first graph knowledge by using the knowledge extraction model, this module further converts the above first graph knowledge into the question to be confirmed, and pushes the above question to be confirmed to the user through at least one preset channel for answering, because it is a question-and-answer question, and the user only needs to provide a certain or uncertain answering result, the requirement for the user is low, and it may be realized by ordinary users who do not have a lot of professional knowledge; and the above question to be confirmed may be opened to the outside world and implemented by connecting different application scenarios or platforms. After the above answering results of ordinary users are collected, they may be used as annotated first graph knowledge.

Furthermore, the graph construction module 25 is also configured to construct the knowledge graph based on the answering results of the user.

After acquiring the answering results of the user for the question to be confirmed through various application scenarios or platforms, the knowledge graph may be constructed based on the above answering results.

In the embodiment of the present disclosure, the first graph knowledge extracted by the knowledge extraction model is converted into questions to be confirmed, and the above questions are connected to different application scenarios or platforms, so that ordinary users can answer and the first graph knowledge is manually annotated. The above technical solution of the embodiment of the present disclosure not only reduce the difficulty of constructing the knowledge graph, but also improve the efficiency of constructing the knowledge graph.

In some embodiments, the reliability of the first graph knowledge confirmed by the user's answer is relatively high, and it may be considered as sample data to train the knowledge acquisition model, so as to improve the performance of the knowledge acquisition model. FIG. 16 is a schematic structural diagram of another apparatus for constructing a knowledge graph provided by an embodiment of the present disclosure. As shown in FIG. 16, the apparatus may further include a fourth acquisition module 26 and an optimization training module 27, wherein the fourth acquisition module 26 is configured to obtain second annotation result data based on the answering results of the user; considering that the answering results of the user are equivalent to results of re-correcting the graph knowledge extracted by the knowledge acquisition model, this module uses the result to obtain the second annotation result data, in order to realize re-optimization of the knowledge acquisition model, which may be regarded as a kind of optimization training data.

The optimization training module 27 is configured to perform optimization training on the knowledge acquisition model based on the second annotation result data to obtain an optimized knowledge acquisition model.

After the knowledge acquisition model is optimization trained through the above second annotation result data, the performance of the knowledge acquisition model may be significantly improved, for example, the performance of the knowledge acquisition model in terms of the accuracy, the recall, the F1 and the like may be improved.

The graph construction module 25 is specifically configured to convert graph knowledge extracted by using the optimized knowledge acquisition model into a question to be confirmed, and push it to at least one user for answering.

For the optimized knowledge acquisition model, the extracted first graph knowledge may be converted into questions to be confirmed in the manner shown in the embodiment shown in FIG. 15, and then the above questions to be confirmed are pushed to the user for answering.

As an implementation solution of cyclic optimization, in the embodiment of the present disclosure, the optimization training data may be generated based on the answering results of the user for many times, and the knowledge acquisition model may be optimization trained, that is, the above respective modules may repeatedly perform corresponding functions to achieve it.

In the embodiment of the present disclosure, the answering results that are confirmed by the user may be used as the optimization training data to continuously optimize the knowledge acquisition model, and then more accurate questions are generated and pushed to the user for answering. In some embodiments, if it is determined that a performance parameter value of the graph knowledge which is extracted from the original information data set by using the knowledge acquisition model reaches a certain threshold after analyzing the answering results of the user, that is, if it is greater than or equal to a first preset threshold, it may be considered to store the above first graph knowledge in a database, and directly use it to construct the knowledge graph, that is, in the embodiment shown in the above FIG. 16, the graph construction module 25 is further configured to construct the knowledge graph directly based on the first graph knowledge in a case where it is determined based on the answering results of the user that a performance parameter value of the first graph knowledge extracted from the original information data set by using the knowledge acquisition model is greater than or equal to a first preset threshold.

In the embodiment of the present disclosure, the performance parameter value may include parameters that measure the performance of the knowledge acquisition model, such as the accuracy, the recall, the F1 value and the like, or other numerical values calculated according to the above parameters, wherein the F1 value is a harmonic mean of the accuracy and the recall.

In some embodiments, when the graph construction module 25 pushes the question to be confirmed to the user, a user answering interface may be provided, the user answering interface displays the question to be confirmed and an answer submission control.

The user answering interface may be referred to as shown in FIG. 8, where the question to be confirmed "Is T, X REYA a company?" and three answer submission controls "Indetermination", "Yes" and "No" are displayed on the user answering interface, the user can submit the answering result by clicking the control.

Optionally, one or all of the following contents may also be displayed on the above user answering interface:
First, source information data of the first graph knowledge corresponding to the question to be confirmed is displayed. The source information data may be a part of the original information data set. In the embodiment shown in FIG. 8, it is a reference article. The article is the source information data for the above question to be confirmed "Is 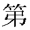 X 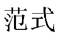 a company?";
Second, the knowledge graph created based on the first graph knowledge corresponding to the question to be confirmed is displayed. As shown in FIG. 8, the knowledge graph created based on the first graph knowledge corresponding to the above question to be confirmed "Is 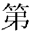 X 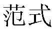 a company?" is shown.

For the display method of the above question to be confirmed, only one question to be confirmed is displayed at a time, and the knowledge graph corresponding to the question to be confirmed is displayed at the same time, which may be regarded as a graph mode display method. Different from the graph mode display method, the embodiment of the present disclosure also provides an efficiency mode display method.

In the efficiency mode display mode, the graph construction module 25 may display at least two questions to be confirmed on the user answering interface, and the above answer submission control includes a batch selection control. FIG. 9 is a schematic diagram of an efficiency mode display interface provided in an embodiment of the present disclosure. As shown in FIG. 9, a plurality of questions to be confirmed are displayed on the user answering interface, and the user can select each question to be confirmed individually, and the answering result may be given by a select-all control, an all-deselection control, an inverse-selection control and a partial multiple-selection control, which can significantly improve the efficiency of graph construction.

In addition, in this efficiency mode, according to how many contents are displayed on the user answering interface, it may be selectively determined whether to display the source information data; for example, when there are many questions to be confirmed, the source information data is no longer displayed, FIG. 9 does not show the reference article in FIG. 8, and the user need to rely on his/her own common sense to judge whether the question to be confirmed is correct.

In some embodiments, the acquiring the knowledge acquisition model that satisfies the preset conditions by the model training module 23 may be that by using the same part of information data in the original information data set, comparation is made by using second graph knowledge acquired through using the knowledge acquisition model and third annotation result data acquired through manual annotation respectively, to determine whether the performance parameter value of the knowledge acquisition model satisfies the preset condition. The above model training module 23 is configured to train the knowledge acquisition model based on the first annotation results; for the same part of information data in the original information data set, acquiring second graph knowledge by using the knowledge acquisition model and acquiring third annotation result data through the manual annotation interface, respectively; determining that the knowledge acquisition model satisfies the preset condition in a case where it is determined based on the second graph knowledge and the third annotation result data that a performance parameter value of the knowledge acquisition model is greater than or equal to a second preset threshold.

Through the above method, the performance of the knowledge acquisition model may be controlled, and only when the performance of the knowledge acquisition model satisfies the requirements, the first graph knowledge acquired by the knowledge acquisition model is used to construct the knowledge graph.

Furthermore, the model training module 23 is further configured to continue to perform optimization training on the knowledge acquisition model based on the third annotation result data in a case where it is determined based on the second graph knowledge and the third annotation result data that the performance parameter value of the knowledge acquisition model is less than the second preset threshold

That is, for the knowledge acquisition model whose performance parameter values cannot satisfy the requirements, it means that the reliability of the model is not enough, and it needs to be optimized. The above third annotation result data is used as manual annotation data, which has high reliability. Thus, in this step, the knowledge acquisition model may be continued to be optimization trained by using the third result annotation data.

In the embodiment of the present disclosure, the performance parameter value may include parameters that measure the performance of the knowledge acquisition model, such as the accuracy, the recall, the F1 value and the like, or other numerical values calculated according to the above parameters, wherein the F1 value is a harmonic mean of the accuracy and the recall.

In the above embodiments of the present disclosure, the acquisition of the original information data set uploaded through the data port may be to provide a data upload interface, and acquire the original information data set uploaded through the data upload interface, and the original information data set includes at least one of an original corpus data set, an original picture data set and an original video data set, and alternatively, the original corpus data set includes unstructured text data. The unstructured text data may cover most data forms, so that the embodiments of the present disclosure have a strong scope of application.

In some embodiments, in addition to constructing the knowledge graph by using the above unstructured data, structured data may also be used to construct the knowledge graph. The graph construction apparatus may further include a sixth acquisition module 29, the sixth acquisition module 29 is configured to obtain structured data uploaded through the data upload port.

The data upload port may include various forms, for example, a data upload interface may be provided to obtain structured data uploaded through the data upload interface; furthermore, for the structured data, its prominent feature is that it has relatively fixed fields, thus it may be considered that the structured data is directly used to form the knowledge graph. Therefore, when acquiring the structured data, fields in structured data corresponding to a type of graph knowledge in the knowledge graph to be constructed is further acquired, for example, when the knowledge graph includes graph knowledge of an entity type, a relationship type and an event type, it is necessary to specify its corresponding content in the structured data. For example, for a relationship of "company - founder - person", it is necessary to specify corresponding fields of "company" and "person" in structured data; after the above relationship is created, graph knowledge may be automatically introduced from the structured data.

Furthermore, the graph construction module 25 is further configured to construct the knowledge graph based on graph knowledge in the structured data.

FIG. 12 is a schematic interface diagram of a structured data upload interface provided by an embodiment of the present disclosure. As shown in FIG. 12, a company information table in csv format is uploaded, a field access part is used to enter fields in structured data corresponding to a type of graph knowledge, for example, enter a corresponding relationship between two fields of a name and an age in the "company information table.csv" and an entity type in the knowledge graph. In addition, the knowledge graph generated based on the structured data may be continued to be displayed on this interface.

In some embodiments, a graph construction overview interface may also be provided, and the overview interface may implement at least one of the following functions: on one hand, a priority of first graph knowledge of each type may be acquired through the overview interface, and then a question to be confirmed is pushed with reference to the priority when pushing the question; on the other hand, some related information in the graph construction process is displayed through this interface, such as construction information, performance parameter information, etc.

For the above first aspect, if the above first graph knowledge includes at least one of an entity type, a relationship type and an event type, the graph construction apparatus may further provide a fifth acquisition module 28, the fifth acquisition module 28 is configured to acquire a priority of first graph knowledge of each type input through the graph construction overview interface.

In the above disclosed embodiments, the graph construction module 25 is specifically configured to push, through the preset channel, the question to be confirmed corresponding to the first graph knowledge of each type based on the priority.

For the above second aspect, the above apparatus for constructing the knowledge graph may further configured to perform at least one of:
acquiring performance parameter information of the knowledge acquisition model, and displaying it on the graph construction overview interface, wherein the performance parameter information includes at least one of an accuracy, a recall and a F1; and/or,
acquiring construction information of the first graph knowledge of each type of the knowledge graph, and displaying it on the graph construction overview interface, wherein the construction information includes a constructor, a number of times of construction, and a construction accuracy.

FIG. 13 is a schematic interface diagram of a graph construction overview interface provided by an embodiment of the present disclosure. As shown in FIG. 13, it is divided according to a type of first graph knowledge, such as an entity type, a relationship type and an event type, provides construction information corresponding to first graph knowledge of each type, such as text construction times, graph mode construction times, efficiency mode construction times, and accuracy, etc., where the text construction is a process that annotation may be made by business experts to obtain first annotation result data in the above embodiment, which may refer to the manual annotation interface in FIG. 6; the graph mode construction may refer to the user answering interface shown in FIG. 8; the efficiency mode construction may refer to the user answering interface shown in FIG. 9. In addition, a priority of graph knowledge of each type may be designated. The priority provides a corresponding selection function. By selecting a high, medium or low, a probability that a question corresponding to first graph knowledge of one type is pushed may be set.

Furthermore, in the dimension of the input original information data set, the corresponding performance parameter information of the knowledge acquisition model may be viewed. The performance parameter information includes at least one of an accuracy, a recall and a F1, and is shown on the construction overview interface, the above performance parameter information may correspond to different data sets in the original information data set, or may correspond to the entire data set, which is not limited in this embodiment of the present disclosure.

According to the prior art, in the process of constructing the above type of knowledge graph, especially in the process of constructing the knowledge graph based on the unstructured data, it requires the participation of professional NLP experts or knowledge graph experts to complete, which is difficult and inefficient. In the technical solution for constructing a knowledge graph provided by the embodiments of the present disclosure, the graph knowledge extracted by using the knowledge acquisition model is converted into questions to be confirmed, the questions to be confirmed are pushed to the user for answering, and the knowledge graph is constructed based on the answering results of the user. Therefore, a knowledge graph construction method of using a question-and-answer method for knowledge annotation is proposed, which can reduce the difficulty of constructing the knowledge graph and improve the efficiency of constructing the knowledge graph.

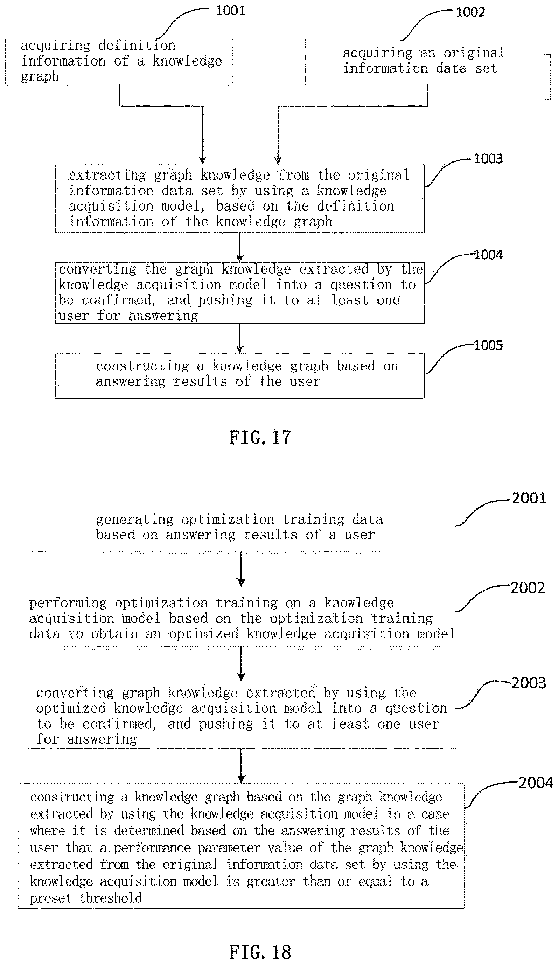

FIG. 17 is a schematic flowchart of a method for constructing a knowledge graph according to another embodiment of the present disclosure. As shown in FIG. 17, the method includes the following steps.

Step 1001, definition information of a knowledge graph is acquired.

This step is to obtain definition information of a knowledge graph to be constructed in the process of constructing the knowledge graph. The above definition information may be different according to a type or kind of the knowledge graph to be constructed. The specific content of the definition information corresponds to constituent elements included in the knowledge graph, for example, in the above embodiment, when the knowledge graph may include entity nodes, event nodes, and relationship edges, the acquiring the definition information of the knowledge graph may include acquiring at least one of entity type definition information, event type definition information and relationship type definition information of the knowledge graph.

In addition, in the embodiment of the present disclosure, the knowledge graph supports three situations: complete redefinition, fixed knowledge graph, and preset knowledge graph, wherein the complete redefinition needs to provide an input port of the definition information of the knowledge graph to receive newly input definition information, the fixed knowledge graph refers to a situation of constructing a defined knowledge graph. At this time, the definition information of the knowledge graph may be stored in the database. In this step, the definition information of the knowledge graph is acquired from the database; the preset knowledge graph refers to that the user defines a part of a graph and the system pre-builds some definition information of the graph. In the process of the user defining the graph, the preset model type of graph knowledge in the system is directly/indirectly reused. The user-defined part needs to provide the input port of the definition information of the knowledge graph to receive newly input definition information.

Step 1002, an original information data set is acquired.

The original information data set acquired in this step is original data used to construct the knowledge graph, and may include various forms, for example, may be at least one of an original corpus data set, an original image data set, and an original video data set. The original corpus data set may be divided into unstructured text data and structured text data according to different data types. In this embodiment of the present disclosure, graph knowledge extraction may be performed for the unstructured text data. In some embodiments, the unstructured text data may be accessed through a database, for example, from mysql, mongodb, ES, hive and other types of databases, and the unstructured data may also be accessed through file uploading.

Step 1003, graph knowledge is extracted from the original information data set by using a knowledge acquisition model, based on the definition information of the knowledge graph.

In this step, based on the definition information of the knowledge graph acquired in the above step 1001, a pre-trained knowledge acquisition model is used to extract the graph knowledge from the original corpus data set. When the definition information of the knowledge graph includes at least one of entity type definition information, event type definition information and relationship type definition information with reference to step 1001, the graph knowledge acquired in this step may also include at least one of graph knowledge of the entity type, graph knowledge of the event type and graph knowledge of the relationship type.

Step 1004, the graph knowledge extracted by the knowledge acquisition model is converted into a question to be confirmed, and pushed to at least one user for answering.

In this step, on the basis of extracting the graph knowledge by using the knowledge extraction model, the above graph knowledge is further converted into questions to be confirmed, and the above questions to be confirmed are pushed to the user for answering through at least one preset channel, because it is a question-and-answer question, and the user only needs to provide a certain or uncertain answering result, the requirement for the user is low, and it may be realized by ordinary users who do not have a lot of professional knowledge; and the above question to be confirmed may be opened to the outside world and implemented by connecting different application scenarios or platforms. After the above answering results of ordinary users are collected, they may be used as annotated first graph knowledge.

Step 1005, a knowledge graph is constructed based on answering results of the user.

After acquiring the answering results of the user for the question to be confirmed through various application scenarios or platforms, the knowledge graph may be constructed based on the above answering results.

In the embodiment of the present disclosure, the graph knowledge extracted by the knowledge extraction model is converted into questions to be confirmed, and the above questions are connected to different application scenarios or platforms, so that ordinary users can answer, and manual annotation for the graph knowledge is realized. The above technical solution of the embodiment of the present disclosure not only reduce the difficulty of constructing the knowledge graph, but also improve the efficiency of constructing the knowledge graph.

The above step 1001 is an optional step. If the above step 1001 is not performed, the above step 1003 may directly use the knowledge acquisition model to extract the graph knowledge from the original information data set.

In some embodiments, the reliability of the first graph knowledge confirmed by the user's answer is relatively high, and it may be considered as sample data to train the knowledge acquisition model, so as to improve the performance of the knowledge acquisition model. FIG. 18 is a schematic flowchart of another method for constructing a knowledge graph provided by another embodiment of the present disclosure. On the basis of the embodiment shown in FIG. 17, as shown in FIG. 18, the method may further include:

Step 2001, optimization training data is generated based on answering results of a user.

In this step, considering that the answering results of the user are equivalent to results of re-correcting the graph knowledge extracted by the knowledge acquisition model, in this step, new sample data is generated by using the results, so as to realize re-optimization of the knowledge acquisition model, so it may be used as optimization training data.

Step 2002, optimization training is performed on a knowledge acquisition model based on the optimization training data to obtain an optimized knowledge acquisition model.

After the knowledge acquisition model is optimization trained through the above optimization training data, the performance of the knowledge acquisition model may be significantly improved, for example, the performance of the knowledge acquisition model in terms of the accuracy, the recall and the like may be improved.

Step 2003, graph knowledge extracted by using the optimized knowledge acquisition model is converted into a question to be confirmed, and pushed to at least one user for answering.

For the optimized knowledge acquisition model, the extracted graph knowledge may be converted into questions to be confirmed according to the method in the embodiment shown in FIG. 17, and then the above questions to be confirmed are pushed to the user for answering.

As an implementation solution of cyclic optimization, in the embodiment of the present disclosure, the optimization training data may be generated based on the answering results of the user for many times, and optimization training is performed on the knowledge acquisition model, that is, the above steps 2001 to 2003 are repeatedly performed.

In the embodiment of the present disclosure, the answering results that are confirmed by the user may be used as the optimization training data to continuously optimize the knowledge acquisition model, and then more accurate questions are generated and pushed to the user for answering. In some embodiments, if it is determined that a performance parameter value of the graph knowledge which is extracted from the original information data set by using the knowledge acquisition model reaches a certain threshold after analyzing the answering results of the user, that is, if it is greater than or equal to a preset threshold, it may be considered to store the above graph knowledge in a database, and directly use it to construct the knowledge graph, that is, in the above embodiment shown in FIG. 18, it may further include:

Step 2004, a knowledge graph is constructed directly based on the graph knowledge extracted by using the optimized knowledge acquisition model in a case where it is determined based on the answering results of the user that a performance parameter value of the graph knowledge extracted from the original information data set by using the knowledge acquisition model is greater than or equal to a preset threshold.

In the embodiment of the present disclosure, the performance parameter value may include parameters that measure the performance of the knowledge acquisition model, such as an accuracy, a recall, a F1 value and the like, or other numerical values calculated according to the above parameters, wherein the F 1 value is a harmonic mean of the accuracy and the recall.

In some embodiments, the knowledge acquisition model needs to be used to extract at least one of graph knowledge of an entity type, graph knowledge of an event type, and graph knowledge of a relationship type from the original information data set, where the knowledge acquisition model may be a model of various types, for example, it may include at least one of a rule model, a dictionary model, a statistical learning model, a machine learning model, and a language model.

In addition, in order to obtain the above three types of graph knowledge including the graph knowledge of the entity type, the graph knowledge of the event type and the graph knowledge of the relationship type, a knowledge acquisition model of the entity type, a knowledge acquisition model of the event type and a knowledge acquisition model of the relationship type may be used correspondingly for acquiring, and the specific number of the models is not limited, that is, the extracting the at least one of the graph knowledge of the entity type, the graph knowledge of the event type, and the graph knowledge of the relationship type from the original information data set in the above step includes at least one of:
extracting the graph knowledge of the entity type from the original information data set by using at least one knowledge acquisition model of the entity type;
extracting the graph knowledge of the event type from the original information data set by using at least one knowledge acquisition model of the event type;
extracting the graph knowledge of the relationship type from the original information data set by using at least one knowledge acquisition model of the relationship type.

For a character entity type, the extracting the graph knowledge of the entity type from the original information data set by using the at least one knowledge acquisition model of the entity type may include extracting graph knowledge of the character entity type from the original information data set by using at least one of an available rule model, an available bert language model, an available LSTM+CRF language model and an available few-shot language model.

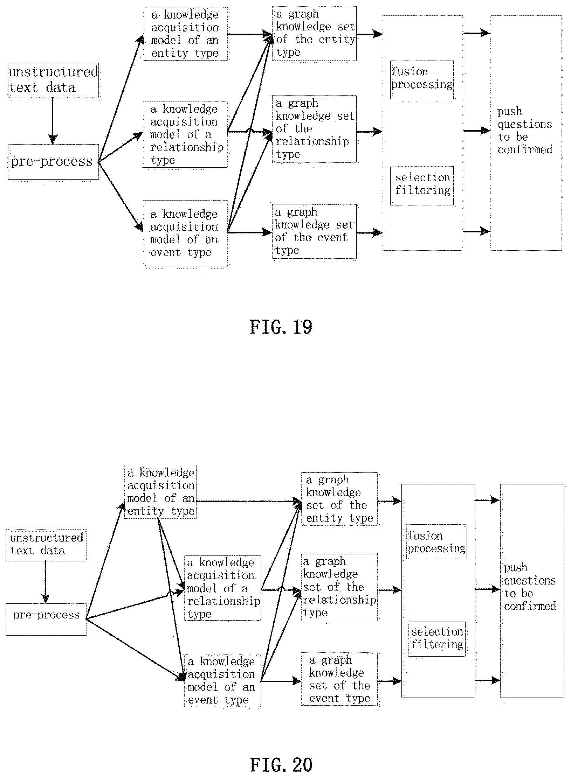

FIG. 19 is a schematic flowchart of yet another method for constructing a knowledge graph according to another embodiment of the present disclosure, and FIG. 20 is a schematic flowchart of still another method for constructing a knowledge graph according to another embodiment of the present disclosure. With reference to FIG. 19 and FIG. 20 respectively, the difference between the two is as follows.

In the embodiment shown in FIG. 19, a knowledge acquisition model of an entity type, a knowledge acquisition model of an event type and a knowledge acquisition model of a relationship type all have independent input interfaces and output interfaces, and corresponding graph knowledge acquired by them is directly processed for subsequent processing; and in the embodiment shown in FIG. 20, the graph knowledge output by any one of the knowledge acquisition model of the entity type, the knowledge acquisition model of the event type and the knowledge acquisition model of the event type is used as input data of one or two of the other knowledge acquisition models. In FIG. 20, the graph knowledge output by the knowledge acquisition model of the entity type is used as the input of the knowledge acquisition model of the event type and the knowledge acquisition mode of the relationship type, and the graph knowledge output by the knowledge acquisition model of the relationship type is used as the input of the knowledge acquisition model of the event type. The above is exemplary, other combinations are also possible.

In addition, as shown in FIG. 19 and FIG. 20, for the graph knowledge of the relationship type, the graph knowledge of the entity type may also be extracted from the graph knowledge of the relationship type, and/or the graph knowledge of the entity type and the graph knowledge of the relationship type may be extracted from the graph knowledge of the event type. At this point, the sources of the graph knowledge of the entity type and the graph knowledge of the relationship type are expanded. On the basis of completing the above extraction of the graph knowledge of the entity type, the graph knowledge of the relationship type and the graph knowledge of the event type, the above graph knowledge may be further classified and collected according to the types, that is, the graph knowledge corresponding to the above three types may be generated, a graph knowledge set of the entity type, a graph knowledge set of the relationship type and a graph knowledge set of the event type are formed respectively.

In some embodiments, the above graph knowledge acquired through the knowledge acquisition model may be repeated or confirmed by the user. Therefore, merge fusion processing is performed on the graph knowledge of each type obtained by the classifying and collecting, and/or selection filtering processing is performed on the graph knowledge obtained by the classifying and collecting.

In the specific fusion processing process, when using multiple different knowledge acquisition models for extracting graph knowledge, multiple identical results may be acquired. For example, when using knowledge acquisition models to extract the character entity type, it is assumed that four knowledge acquisition models are used to perform graph knowledge extraction on a same article containing a character Zhang San, it is possible to extract 4 results of "Zhang San - character"; similarly, the relationship type and the event type also exist in the same situation, so in the process of result processing, merge fusion processing is required. The merge fusion processing not only may directly deduplicate, for example, 4 "Zhang San - character" may be merged into one, and may also perform character matching and similar merge processing, for example, foe an enterprise entity type, there are 3 candidate results, " 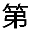 X 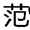 ", " X 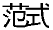 " and " 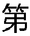 X 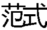 ", they may be combined to get an optimization result " 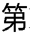 X 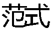 "

In addition, for some graph knowledge, it may have been converted into questions to be confirmed, and have been confirmed or denied, or have been marked as uncertain graph knowledge for many times, this kind of graph knowledge may be filtered out.

In some embodiments, there may be a large number of questions to be confirmed which are converted from the graph knowledge extracted by the knowledge acquisition model. Therefore, a question pool may be generated based on the above questions to be confirmed, and a question to be confirmed is extracted from the question pool in a preset order, and pushed to at least one user for answering. The order of extracting the question to be confirmed from the question pool may be constrained by a learning model or a rule or strategy, which may include a variety of situations, such as the following situations:
One, the question to be confirmed is extracted from the question pool based on a learning model, and pushed to the at least one user for answering.

The learning model is mainly used to extract the question to be confirmed in the question pool, so as to solve the problem of how to select one or a batch of the most suitable questions to be confirmed and push them to the user for answering in the case where there are too many questions in the question pool . The learning model may learn according to the answering results of the user, and determine the order in which the questions to be confirmed are pushed. The input of the learning model may include one or more of information related to the user's answering such as result information of an answered question, related information of a question to be confirmed, correlation information between questions, source related information of a question to be confirmed, related information of an answerer; the output is one or a batch of questions to be confirmed for this user.

Two, the question to be confirmed is extracted from the question pool based on a preset priority and/or a performance parameter value indicator, and pushed to the at least one user for answering.

The preset priority refers to ranking the knowledge acquisition model for constructing the knowledge graph, and the administrator can control graph construction resources according to a granularity of the knowledge acquisition model. For example, if 10 knowledge acquisition models are defined, there are 5 knowledge acquisition models that need to be prioritized for constructing the graph, and their priorities are set as priority. The questions corresponding to the graph knowledge extracted by these 5 knowledge acquisition modules may appear on a Q&A page in a large proportion; if there are 3 of 10 knowledge acquisition models have reached the business requirements, their priorities are set to be suspended, and the questions to be confirmed corresponding to these 3 knowledge acquisition models may no longer be pushed.

A performance parameter index is that in the process of constructing the knowledge graph, the performance parameter indexes of each knowledge acquisition model are inconsistent, the performance parameter indexes of some models are better, and the performance parameter indexes of some models are poor; the indexes of related models are subject to the number of answers to this type of questions. The question ratio is limited, and low-frequency graph knowledge types rarely appear in the question pool. If the system does not intervene, the following conditions continue to occur: the model of high-frequency questions will develop rapidly, and the model of low-frequency questions will develop slowly; therefore, based on the performance parameter index and the system developing in a balanced manner, the questions to be confirmed related to models with lower performance parameter indexes or models of low-frequency questions are preferentially extracted from the question pool. The system adjusts the frequency of occurrence of corresponding questions, improves the model indexes, such that the results of graph construction are generally of good quality.

Three, the question to be confirmed is extracted from the question pool based on a correlation of the graph knowledge, and pushed to the at least one user for answering. The above method of using the correlation may be to ask a question of an entity type first, such as "Is 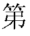 X 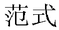 a company"; after the user confirms the answer, continue to ask a question of a relationship type, such as whether "T, X REYA - has a product - AA" belongs to the relationship of "enterprise - has a product - product"; after the user confirms the answer, continue to ask about a release event of the AA product of the T, X REYA company, etc., and ask questions in turn according to the above correlation.

Four, the question to be confirmed is extracted from the question pool based on a granularity of data in the original information data set, and pushed to the at least one user for answering. For example, if the original information data set includes multiple articles, according to a granularity of one article, the questions about the entity type, the relationship type and time type extracted from this article may be asked in turn.

In some embodiments, the pushing the question to be confirmed to at least one user for answering may include multiple implementations, for example, the question to be confirmed may be pushed to at least one user for answering through at least one of a text method, an image method or a voice broadcast method. The text method mainly refers to that an interactive interface may be displayed on a screen of an electronic device, and the question to be confirmed is displayed in the form of a text on the interactive interface; the image method is to make the question to be confirmed into a picture or video for displaying; the voice broadcast method is to make the question to be confirmed into voice and publish it to the user.

Furthermore, after the question to be confirmed is pushed to the user through any of the above methods, the user can also submit an answering result through various methods. For example, the user's answering result may be acquired by any one of a keyboard method, a mouse input method, a touch input method, a voice input method, or a somatosensory input method.

In some embodiments, the question to be confirmed may be pushed to the user through various application scenarios or platforms. The pushing the question to be confirmed to the user may include one of the following ways.

The first way is to push the question to be confirmed to a shared learning platform, such as a wiki and other learning platforms, where the question to be confirmed is displayed on the learning platform and answered by users.

The second way is to push the question to be confirmed to a login verification platform, and the question to be confirmed may be displayed to the user in the form of a verification code, so that each user can answer and enter an answering result during the verification process of entering the verification code.

The third way is to push the question to be confirmed to an operation platform, wherein the operation platform includes, but not limited to, least one of a customer service system platform, an evaluation system platform, and a crowdsourcing platform.

Pushing the question to be confirmed in the above various ways may make full use of various resources to obtain user resources, satisfy the answer to a large number of questions to be confirmed, and further improve the construction efficiency of the knowledge graph.

In some embodiments, after the question to be confirmed is pushed to the user and the answering results of the user for the question to be confirmed are received, the knowledge graph may be further constructed according to the answering results of the user, and the specific construction method may include:
It is determined whether the preset confirmation condition is satisfied based on the answering results of the user, and when the preset confirmation condition is satisfied, the knowledge graph is constructed according to the graph knowledge corresponding to the answering results.

Usually, the answering results of the user may include a confirmation result and a deny result, or an indeterminate option may be further provided. Then when the answering results of the user include a confirmation type result and a deny type result, the above determining whether the preset confirmation condition is satisfied based on the answering results of the user includes:
determining whether the preset confirmation condition is satisfied, based on a number of confirmation type results and/or a number of deny type results.

For example, for a question to be confirmed that is pushed to the user, the answering results that the user can choose include "Yes", "No" and "Indetermination". When the answering result of the user is "Yes", the graph knowledge corresponding to the question gets one person' support, that is, the number of confirmation type results increases by 1; and when the answering result of the user is "No", that is, the number of deny type results increases by 1, and the preset confirmation condition is set that the number of confirmation type results or the number of deny type results must be reached a certain value, then it may be further determined whether the preset confirmation condition is satisfied.

Furthermore, according to different situations and requirements, different accuracies may be set for the above confirmation condition, that is, the preset confirmation condition includes a first accuracy confirmation condition and a second accuracy confirmation condition, and quantity requirements of the first accuracy confirmation condition and the second accuracy confirmation condition are different. For example, the first accuracy confirmation condition requires that the answering results satisfy one confirmation type result of "Yes", while the second accuracy confirmation condition requires that the answering results satisfy five confirmation type results of "Yes".

In addition, the step of constructing the knowledge graph according to the graph knowledge corresponding to the answering results may specifically include:
constructing entity nodes in the knowledge graph according to graph knowledge of an entity type;
constructing entity nodes that do not exist in the knowledge graph and constructing relational relation edges according to graph knowledge of a relation type;
constructing entity nodes that do not exist in the knowledge graph and constructing event nodes and events centered on the event nodes according to graph knowledge of an event type.

Referring to the above embodiment, it has been explained that when the question to be confirmed is pushed, it may be pushed based on a correlation question, for example, the following steps are included:

Firstly, the first question pushed is "Is 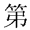 X 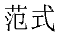 a company?", if the answering result of the user is "Yes", an entity node may be established on the knowledge graph; if the answering result of the user is "No", the above correlation question may be skipped, and at the same time, the "T, X REYA" as graph knowledge for a company may be included in a negative list, and may be filtered out in the subsequent extraction of graph knowledge.

In the embodiment of the present disclosure, the graph knowledge of the entity type corresponds to the entity node on the graph. In some cases, the entity type may also be referred to as a node type.

Secondly, the second question pushed is "whether ' 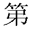 X 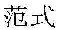 - has a product - AA' belongs to a relationship of 'enterprise - has a product - product'?", if the answering result of the user is "Yes", when the entity node " 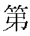 X 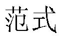 " does not exist, the entity node " 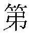 X 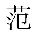 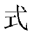 " is established, and a relationship edge of " 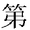 X 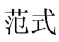 - has a product - AA" is created on the knowledge graph. If the answering result of the user is "No", the graph knowledge corresponding to this question may be included in the negative list, and may be filtered out in the subsequent extraction of graph knowledge.

In addition, for the question generated from the graph knowledge of the event type, for example, the question is "whether there is a film and television work release event 01, relationships within the event is as follows:
film and television work release event 01 - film and television work name - Iron Man;
film and television works release event 01 - release time - April 30, 2008;
film and television work release event 01 - release location - China;
film and television work release event 01 - director - Jon Favreau;
film and television work release event 01 - star - Robert Downey Jr;
film and television work release event 01 - star - Gwyneth Paltrow;
film and television work release event 01 - star - Terrence Howard;
film and television work release event 01 - star - Jeff Bridges.

If the answering result of the user is "Yes", when there is no entity node associated with the above event on the knowledge graph, entity nodes are created, such as the entity nodes "Iron Man", "April 30, 2008", "China", etc., at the same time, an event ID may be generated by calculating based on the entity nodes associated with the event, such as the film and television work release event 01, and an event node may be constructed on the knowledge graph as the entity node, and the events may be constructed with the event node as the center:
film and television work release event 01 - film and television work name - Iron Man;
film and television works release event 01 - release time - April 30, 2008;
film and television work release event 01 - release location - China;
film and television work release event 01 - director - Jon Favreau;
film and television work release event 01 - star - Robert Downey Jr;
film and television work release event 01 - star - Gwyneth Paltrow;
film and television work release event 01 - star - Terrence Howard;
film and television work release event 01 - star - Jeff Bridges.

If the answering result of the user is "No", the above events may be discarded and included in the negative list. When the knowledge acquisition model is subsequently used to extract the graph knowledge, the graph knowledge corresponding to the above question may be filtered out to achieve the optimization effect.

In the embodiment of the present disclosure, for the entity nodes, relationship edges and events in the constructed knowledge graph, the data storage forms thereof may be a data table structure, a json structure or an rdf structure, and the above data storage structures all have good scalability.

In some embodiments, the original information data set may include at least one of an original corpus data set, an original image data set, and an original video data set. For the above various types of original information, the knowledge acquisition model may be used to extract the graph knowledge, and manual annotation is realized through the question-and-answer method provided by the embodiment of the present disclosure, and the knowledge graph is constructed by using the annotated results.

For the original corpus data set, the original corpus data may be acquired from unstructured text data, and the original corpus data may be further pre-processed. For the case where the original corpus data is the unstructured text data, the above acquisition of the original corpus data set may specifically include the following steps:
Unstructured text data is acquired.

The unstructured text data is pre-processed, and the process of the pre-processing may include at least one of encoding, word segmentation, processing of using a rule model and dictionary matching processing.

Reference may be made to the embodiments shown in FIGS. 19 and 20 above, wherein for the unstructured text data, after the above pre-processing is performed, the pre-processed original corpus data is input into the knowledge acquisition model for extracting the graph knowledge.

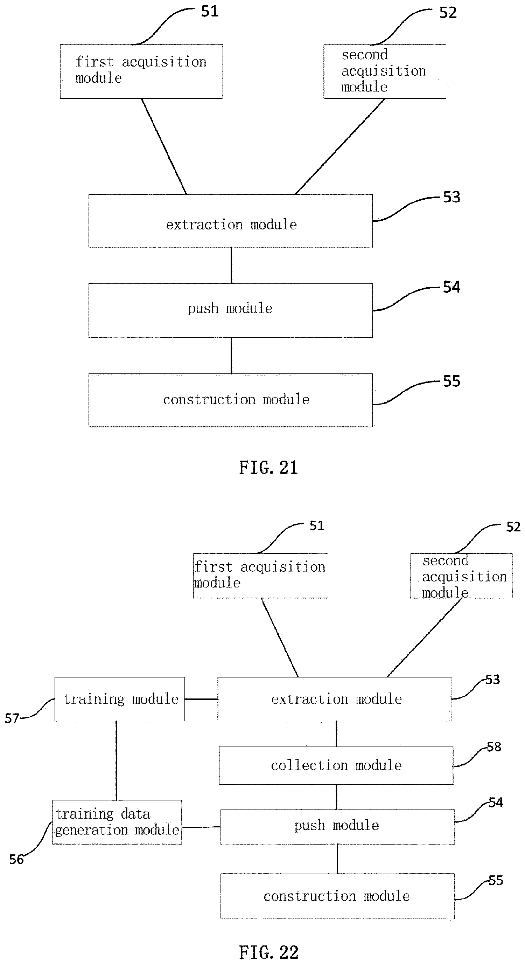

Corresponding to the foregoing method embodiments, the embodiments of the present disclosure further provide an apparatus for constructing a knowledge graph. FIG. 21 is a schematic structural diagram of an apparatus for constructing a knowledge graph provided by another embodiment of the present disclosure. As shown in FIG. 21, the apparatus includes: a first acquisition module 51, a second acquisition module 52, an extraction module 53, and a push module 54 and construction module 55.

The first acquisition module 51 is configured to obtain definition information of a knowledge graph, specifically, the first acquisition module 51 obtains definition information of a knowledge graph to be constructed in the process of constructing the knowledge graph. The above definition information may be different according to a type or kind of the knowledge graph to be constructed. The specific content of the definition information corresponds to constituent elements included in the knowledge graph, for example, in the above embodiment, when the knowledge graph may include entity nodes, event nodes, and relationship edges, the acquiring the definition information of the knowledge graph may include acquiring at least one of entity type definition information, event type definition information and relationship type definition information of the knowledge graph.

In addition, in the embodiment of the present disclosure, the knowledge graph supports three situations: complete redefinition, fixed knowledge graph, and preset knowledge graph, wherein the complete redefinition needs to provide an input port of the definition information of the knowledge graph to receive newly input definition information, the fixed knowledge graph refers to a situation of constructing a defined knowledge graph. At this time, the definition information of the knowledge graph may be stored in the database. In this step, the definition information of the knowledge graph is acquired from the database; the preset knowledge graph refers to that the user defines a part of a graph and the system pre-builds some definition information of the graph. In the process of the user defining the graph, the preset model type of graph knowledge in the system is directly/indirectly reused. The user-defined part needs to provide the input port of the definition information of the knowledge graph to receive newly input definition information.

The second acquisition module 52 is configured to acquire an original information data set. Specifically, the original information data set acquired is original data used to construct the knowledge graph, and may include various forms, for example, may be at least one of an original corpus data set, an original image data set, and an original video data set. The original corpus data set may be divided into unstructured text data and structured text data according to different data types. In this embodiment of the present disclosure, graph knowledge extraction may be performed for the unstructured text data. In some embodiments, the unstructured text data may be accessed through a database, for example, from mysql, mongodb, ES, hive and other types of databases, and the unstructured data may also be accessed through file uploading.

The extraction module 53 is configured to extract graph knowledge from the original corpus data set by using a knowledge acquisition model, based on the definition information of the knowledge graph. For example, the extraction module 53 may receive the definition information of the knowledge graph acquired by the first acquisition module 51, use a pre-trained knowledge acquisition model to extract the graph knowledge from the original corpus data set. When the definition information of the knowledge graph acquired by the first acquisition module 51 includes at least one of entity type definition information, event type definition information and relationship type definition information, the graph knowledge acquired in this step may also include at least one of graph knowledge of the entity type, graph knowledge of the event type and graph knowledge of the relationship type correspondingly.

The push module 54 is configured to convert the graph knowledge extracted by the knowledge acquisition model into a question to be confirmed, and push it to at least one user for answering. On the basis of extracting the graph knowledge by using the knowledge extraction model, this module further converts the above graph knowledge into questions to be confirmed, and pushes the above questions to be confirmed to the user for answering through at least one preset channel, because it is a question-and-answer question, and the user only needs to provide a certain or uncertain answering result, the requirement for the user is low, and it may be realized by ordinary users who do not have a lot of professional knowledge; and the above question to be confirmed may be opened to the outside world and implemented by connecting different application scenarios or platforms. After the above answering results of ordinary users are collected, they may be used as annotated graph knowledge.

The construction module 55 is configured to construct a knowledge graph based on answering results of the user. After acquiring the answering results of the user for the question to be confirmed through various application scenarios or platforms, the knowledge graph may be constructed based on the above answering results.

In the embodiment of the present disclosure, the graph knowledge extracted by the knowledge extraction model is converted into questions to be confirmed, and the above questions are connected to different application scenarios or platforms, so that ordinary users can answer, and manual annotation for the graph knowledge is realized. The above technical solution of the embodiment of the present disclosure not only reduce the difficulty of constructing the knowledge graph, but also improve the efficiency of constructing the knowledge graph.

In this embodiment, the above first acquisition module 51 is an optional functional module. If the above first acquisition module 51 is not included, the above extraction module 53 may directly use the knowledge acquisition model to extract the graph knowledge from the original corpus data set. In some embodiments, the reliability of the graph knowledge confirmed by the user's answer is relatively high, and it may be considered as sample data to train the knowledge acquisition model, so as to improve the performance of the knowledge acquisition model. FIG. 22 is a schematic structural diagram of another apparatus for constructing a knowledge graph according to an embodiment of the present disclosure. As shown in FIG. 22, the apparatus may further include a training data generation module 56 and a training module 57.

The training data generation module 56 is configured to generate optimization training data based on answering results of the user. Considering that the answering results of the user are equivalent to results of re-correcting the graph knowledge extracted by the knowledge acquisition model, this module generates new sample data by using the results, so as to realize re-optimization of the knowledge acquisition model, so it may be used as optimization training data.

The training module 57 is configured to perform optimization training on the knowledge acquisition model based on the optimization training data to obtain an optimized knowledge acquisition model. After the knowledge acquisition model is optimization trained through the above optimization training data, the performance of the knowledge acquisition model may be significantly improved, for example, the performance of the knowledge acquisition model in terms of the accuracy, the recall and the like may be improved.

The above push module 54 is further configured to convert graph knowledge extracted by using the optimized knowledge acquisition model into a question to be confirmed, and push it to at least one user for answering.

For the optimized knowledge acquisition model, the extracted graph knowledge may be converted into questions to be confirmed according to the method in the embodiment shown in FIG. 5, and then the above questions to be confirmed are pushed to the user for answering.

As an implementation solution of cyclic optimization, in the embodiment of the present disclosure, the optimization training data may be generated based on the answering results of the user for many times, and optimization training is performed on the knowledge acquisition model, that is, the above training data generation module 56, training module 57 and push module 54 repeatedly perform the above processing processes.

In the embodiment of the present disclosure, the answering results that are confirmed by the user may be used as the optimization training data to continuously optimize the knowledge acquisition model, and then more accurate questions are generated and pushed to the user for answering. In some embodiments, if it is determined that a performance parameter value of the graph knowledge which is extracted from the original corpus information data set by using the knowledge acquisition model reaches a certain threshold after analyzing the answering results of the user, that is, if it is greater than or equal to a preset threshold, it may be considered to store the above graph knowledge in a database, and directly use it to construct the knowledge graph, that is, in the above embodiment shown in FIG. 22, the construction module 55 may further be configured to construct the knowledge graph directly based on the graph knowledge extracted from the original corpus information data set by using the knowledge acquisition model in a case where it is determined based on the answering results of the user that a performance parameter value of the graph knowledge extracted by using the knowledge acquisition model is greater than or equal to a preset threshold. In the embodiment of the present disclosure, the performance parameter value may include parameters that measure the performance of the knowledge acquisition model, such as an accuracy, a recall, a F1 value and the like, or other numerical values calculated according to the above parameters, wherein the F1 value is a harmonic mean of the accuracy and the recall.

In some embodiments, the first acquisition module 51 is configured to acquire entity type definition information, event type definition information and relationship type definition information of the knowledge graph. The extraction module 53 needs to use the knowledge acquisition model to extract at least one of graph knowledge of an entity type, graph knowledge of an event type, and graph knowledge of a relationship type from the original corpus information data set, where the knowledge acquisition model may be a model of various types, for example, it may include at least one of a rule model, a dictionary model, a statistical learning model, a machine learning model, and a language model.

In addition, in order to obtain the above three types of graph knowledge including the graph knowledge of the entity type, the graph knowledge of the event type and the graph knowledge of the relationship type, a knowledge acquisition model of the entity type, a knowledge acquisition model of the event type and a knowledge acquisition model of the relationship type may be used correspondingly for acquiring, and the specific number of the models is not limited, that is, the extraction module 53 in the above embodiment shown in FIG. 21 is configured to extract the at least one of the graph knowledge of the entity type, the graph knowledge of the event type, and the graph knowledge of the relationship type from the original corpus information data set, which may include at least one of:
extracting the graph knowledge of the entity type from the original corpus information data set by using at least one knowledge acquisition model of the entity type;
extracting the graph knowledge of the event type from the original corpus information data set by using at least one knowledge acquisition model of the event type;
extracting the graph knowledge of the relationship type from the original corpus information data set by using at least one knowledge acquisition model of the relationship type.

For a character entity type, the extracting the graph knowledge of the entity type from the original corpus information data set by using the at least one knowledge acquisition model of the entity type may include extracting graph knowledge of the character entity type from the original corpus information data set by using at least one of an available rule model, an available bert language model, an available LSTM+CRF language model and an available few-shot language model.

Still referring to the above FIGS. 19 and 20, the difference between the two is:
In the embodiment shown in FIG. 19, a knowledge acquisition model of an entity type, a knowledge acquisition model of an event type and a knowledge acquisition model of a relationship type all have independent input interfaces and output interfaces, and corresponding graph knowledge acquired by them is directly processed for subsequent processing; and in the embodiment shown in FIG. 20, the graph knowledge output by any one of the knowledge acquisition model of the entity type, the knowledge acquisition model of the event type and the knowledge acquisition model of the event type is used as input data of one or two of the other knowledge acquisition models. In FIG. 20, the graph knowledge output by the knowledge acquisition model of the entity type is used as the input of the knowledge acquisition model of the event type and the knowledge acquisition mode of the relationship type, and the graph knowledge output by the knowledge acquisition model of the relationship type is used as the input of the knowledge acquisition model of the event type. The above is exemplary, other combinations are also possible.

In addition, as shown in FIG. 19 and FIG. 20, when extracting the graph knowledge, the extraction module 53 may extract the graph knowledge of the entity type from the graph knowledge of the relationship type, and/or extract the graph knowledge of the entity type and the graph knowledge of the relationship type from the graph knowledge of the event type. At this point, the sources of the graph knowledge of the entity type and the graph knowledge of the relationship type are expanded. On the basis of completing the above extraction of the graph knowledge of the entity type, the graph knowledge of the relationship type and the graph knowledge of the event type, as further shown in FIG. 22, a collection module 58 may be further provided. The collection module 58 is configured to classify and collect the above graph knowledge according to the types, that is, the graph knowledge corresponding to the above three types may be generated.

In some embodiments, the above graph knowledge acquired through the knowledge acquisition model may be repeated or have been confirmed by the user. Therefore, the above collection module may further perform merge fusion processing on the graph knowledge of each type obtained by the classifying and collecting, and/or perform selection filtering processing on the graph knowledge obtained by the classifying and collecting.

In the specific fusion processing process, when multiple different knowledge acquisition models are used to extract graph knowledge, multiple identical results may be acquired. For example, when knowledge acquisition models are used to extract the character entity type, it is assumed that four knowledge acquisition models are used to perform graph knowledge extraction on a same article containing a character Zhang San, it is possible to extract 4 results of "Zhang San - character"; similarly, the relationship type and the event type also exist in the same situation, so in the process of result processing, merge fusion processing is required. The merge fusion processing not only may directly deduplicate, for example, 4 "Zhang San - character" may be merged into one, and may also perform character matching and similar merge processing, for example, foe an enterprise entity type, there are 3 candidate results, " 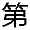 X 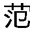 ", " X 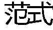 " and " 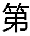 X 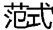 ", they may be combined to get an optimization result " 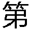 X 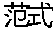 ".

In addition, for some graph knowledge, it may have been converted into questions to be confirmed, and have been confirmed or denied, or have been marked as uncertain graph knowledge for many times, this kind of graph knowledge may be filtered out.

In some embodiments, there may be a large number of questions to be confirmed which are converted from the graph knowledge extracted by the knowledge acquisition model. Therefore, the push module 54 may generate a question pool based on the above questions to be confirmed, and extract a question to be confirmed from the question pool in a preset order, and push it to at least one user for answering. The order of extracting the question to be confirmed from the question pool may be constrained by a learning model or a rule or strategy, which may include a variety of situations, such as the following situations:
One, the question to be confirmed is extracted from the question pool based on a learning model, and pushed to the at least one user for answering.

The learning model is mainly used to extract the question to be confirmed in the question pool, so as to solve the problem of how to select one or a batch of the most suitable questions to be confirmed and push them to the user for answering in the case where there are too many questions in the question pool. The learning model may learn according to the answering results of the user, and determine the order in which the questions to be confirmed are pushed. The input of the learning model may include one or more of information related to the user's answering such as result information of an answered question, related information of a question to be confirmed, correlation information between questions, source related information of a question to be confirmed, related information of an answerer ; the output is one or a batch of questions to be confirmed for this user.

Two, the question to be confirmed is extracted from the question pool based on a preset priority and/or a performance parameter value indicator, and pushed to the at least one user for answering.

The preset priority refers to ranking the knowledge acquisition model for constructing the knowledge graph, and the administrator can control graph construction resources according to a granularity of the knowledge acquisition model. For example, if 10 knowledge acquisition models are defined, there are 5 knowledge acquisition models that need to be prioritized for constructing the graph, and their priorities are set as priority. The questions corresponding to the graph knowledge extracted by these 5 knowledge acquisition modules may appear on a Q&A page in a large proportion; if there are 3 of 10 knowledge acquisition models have reached the business requirements, their priorities are set to be suspended, and the questions to be confirmed corresponding to these 3 knowledge acquisition models may no longer be pushed.

A performance parameter index is that in the process of constructing the knowledge graph, the performance parameter indexes of each knowledge acquisition model are inconsistent, the performance parameter indexes of some models are better, and the performance parameter indexes of some models are poor; the indexes of related models are subject to the number of answers to this type of questions. The question ratio is limited, and low-frequency graph knowledge types rarely appear in the question pool. If the system does not intervene, the following conditions continue to occur: the model of high-frequency questions will develop rapidly, and the model of low-frequency questions will develop slowly; therefore, based on the performance parameter index and the system developing in a balanced manner, the questions to be confirmed related to models with lower performance parameter indexes or models of low-frequency questions are preferentially extracted from the question pool. The system adjusts the frequency of occurrence of corresponding questions, improves the model indexes, such that the results of graph construction are generally of good quality.

Three, the question to be confirmed is extracted from the question pool based on a correlation of the graph knowledge, and pushed to the at least one user for answering. The above method of using the correlation may be to ask a question of an entity type first, such as "Is 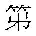 X 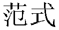 a company"; after the user confirms the answer, continue to ask a question of a relationship type, such as whether " 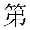 X 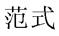 - has a product - AA" belongs to the relationship of "enterprise - has a product - product"; after the user confirms the answer, continue to ask about a release event of the AA product of the 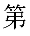 X 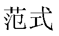 company, etc., and ask questions in turn according to the above correlation.

Four, the question to be confirmed is extracted from the question pool based on a granularity of data in the original corpus information data set, and pushed to the at least one user for answering. For example, if the original corpus information data set includes multiple articles, according to a granularity of one article, the questions about the entity type, the relationship type and time type extracted from this article may be asked in turn.

In some embodiments, the push module 54 is configured to push the question to be confirmed to at least one user for answering, which may include multiple implementations, for example, the question to be confirmed may be pushed to at least one user for answering through at least one of a text method, an image method or a voice broadcast method. The text method mainly refers to that an interactive interface may be displayed on a screen of an electronic device, and the question to be confirmed is displayed in the form of a text on the interactive interface; the image method is to make the question to be confirmed into a picture or video for displaying; the voice broadcast method is to make the question to be confirmed into voice and publish it to the user.

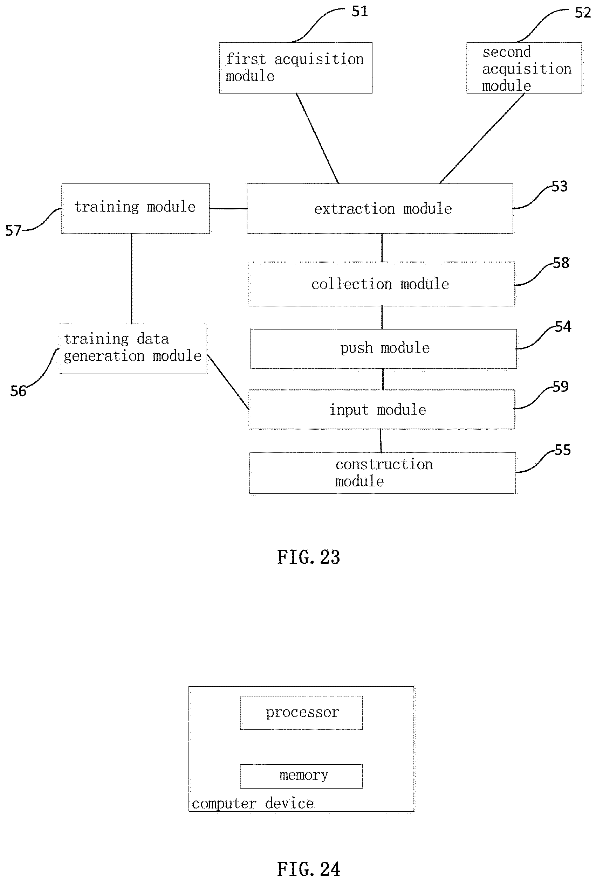

Furthermore, referring to FIG. 23, the apparatus may further include an input module 59, after pushing the question to be confirmed to the user through any of the above methods, the user can also submit the answering result through the input module 59, and the submission method may include various ways. For example, the user's answering result may be acquired by any one of a keyboard method, a mouse input method, a touch input method, a voice input method, or a somatosensory input method.

In some embodiments, the push module 54 may push the question to be confirmed to the user through various application scenarios or platforms. The pushing the question to be confirmed to the user may include one of the following ways.

The first way is to push the question to be confirmed to a shared learning platform, such as a wiki and other learning platforms, where the question to be confirmed is displayed on the learning platform and answered by users.

The second way is to push the question to be confirmed to a login verification platform, and the question to be confirmed may be displayed to the user in the form of a verification code, so that each user can answer and enter an answering result during the verification process of entering the verification code.

The third way is to push the question to be confirmed to an operation platform, wherein the operation platform includes, but not limited to, at least one of a customer service system platform, an evaluation system platform, and a crowdsourcing platform.

Pushing the question to be confirmed in the above various ways may make full use of various resources to obtain user resources, satisfy the answer to a large number of questions to be confirmed, and further improve the construction efficiency of the knowledge graph.

In some embodiments, after the question to be confirmed is pushed to the user and the answering results of the user for the question to be confirmed are received, the construction module 55 constructs the knowledge graph according to the answering results of the user, and the specific construction method may include:

It is determined whether the preset confirmation condition is satisfied based on the answering results of the user, and when the preset confirmation condition is satisfied, the knowledge graph is constructed according to the graph knowledge corresponding to the answering results.

Specifically, the answering results of the user may generally include a confirmation result and a deny result, or an indeterminate option may be further provided. Then when the answering results of the user include a confirmation type result and a deny type result, the above determining whether the preset confirmation condition is satisfied based on the answering results of the user includes:
determining whether the preset confirmation condition is satisfied, based on a number of confirmation type results and/or a number of deny type results.

For example, for a question to be confirmed that is pushed to the user, the answering results that the user can choose include "Yes", "No" and "Indetermination". When the answering result of the user is "Yes", the graph knowledge corresponding to the question gets one person' support, that is, the number of confirmation type results increases by 1; and when the answering result of the user is "No", that is, the number of deny type results increases by 1, and the preset confirmation condition is set that the number of confirmation type results or the number of deny type results must be reached a certain value, then it may be further determined whether the preset confirmation condition is satisfied.

Furthermore, according to different situations and requirements, different accuracies may be set for the above confirmation condition, that is, the preset confirmation condition includes a first accuracy confirmation condition and a second accuracy confirmation condition, and quantity requirements of the first accuracy confirmation condition and the second accuracy confirmation condition are different. For example, the first accuracy confirmation condition requires that the answering results satisfy one confirmation type result of "Yes", while the second accuracy confirmation condition requires that the answering results satisfy five confirmation type results of "Yes".

In addition, the processing method of the construction module 55 constructing the knowledge graph according to the graph knowledge corresponding to the answering results may specifically include: constructing entity nodes in the knowledge graph according to graph knowledge of an entity type; constructing entity nodes that do not exist in the knowledge graph and constructing relational relation edges according to graph knowledge of a relation type; constructing entity nodes that do not exist in the knowledge graph and constructing event nodes and events centered on the event nodes according to graph knowledge of an event type.

Referring to the above embodiment, it has been explained that when the question to be confirmed is pushed, it may be pushed based on a correlation question, for example, the following steps are included:
Firstly, the first question pushed is "Is 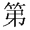 X 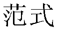 a company?", if the answering result of the user is "Yes", an entity node may be established on the knowledge graph; if the answering result of the user is "No", the above correlation question may be skipped, and at the same time, the " 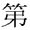 X 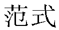 " as graph knowledge for a company may be included in a negative list, and may be filtered out in the subsequent extraction of graph knowledge.

Secondly, the second question pushed is "whether ' 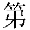 X 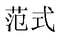 - has a product - AA' belongs to a relationship of 'enterprise - has a product - product'?", if the answering result of the user is "Yes", when the entity node " 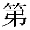 X 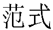 " does not exist, the entity node " 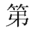 X 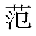 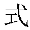 " is established, and a relationship edge of " 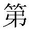 X 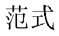 - has a product - AA" is created on the knowledge graph. If the answering result of the user is "No", the graph knowledge corresponding to this question may be included in the negative list, and may be filtered out in the subsequent extraction of graph knowledge.

In addition, for the question generated from the graph knowledge of the event type, for example, the question is " is there a film and television work release event 01, relationships within the event is as follows:
film and television work release event 01 - film and television work name - Iron Man;
film and television works release event 01 - release time - April 30, 2008;
film and television work release event 01 - release location - China;
film and television work release event 01 - director - Jon Favreau;
film and television work release event 01 - star - Robert Downey Jr;
film and television work release event 01 - star - Gwyneth Paltrow;
film and television work release event 01 - star - Terrence Howard;
film and television work release event 01 - star - Jeff Bridges.

If the answering result of the user is "Yes", when there is no entity node associated with the above event on the knowledge graph, entity nodes are created, such as the entity nodes "Iron Man", "April 30, 2008", "China", etc., at the same time, an event ID may be generated by calculating based on the entity nodes associated with the event, such as the film and television work release event 01, and an event node may be constructed on the knowledge graph as the entity node, and the event may be constructed with the event node as the center:
film and television work release event 01 - film and television work name - Iron Man;
film and television works release event 01 - release time - April 30, 2008;
film and television work release event 01 - release location - China;
film and television work release event 01 - director - Jon Favreau;
film and television work release event 01 - star - Robert Downey Jr;
film and television work release event 01 - star - Gwyneth Paltrow;
film and television work release event 01 - star - Terrence Howard;
film and television work release event 01 - star - Jeff Bridges.

If the answering result of the user is "No", the above event may be discarded and included in the negative list. When the knowledge acquisition model is used subsequently to extract the graph knowledge, the graph knowledge corresponding to the above question may be filtered out to achieve the optimization effect.

In the embodiment of the present disclosure, for the entity nodes, relationship edges and events in the constructed knowledge graph, the data storage forms thereof may be a data table structure, a json structure or an rdf structure, and the above data storage structures all have good scalability.

In some embodiments, the original information data set acquired by the second acquisition module 52 may include at least one of an original corpus data set, an original image data set, and an original video data set. For the above original information of various types, the knowledge acquisition model may be used to extract the graph knowledge, and manual annotation is realized through the question-and-answer method provided by the embodiment of the present disclosure, and the knowledge graph is constructed by using the annotated results.

Specifically, for the original corpus data set, the original corpus data may be acquired from unstructured text data, and the second acquisition module 52 may further pre-process the original corpus data. Specifically, for the case where the original corpus data is the unstructured text data, the above acquisition of the original corpus data set may include the following steps:
Unstructured text data is acquired.

The unstructured text data is pre-processed, and the process of the pre-processing may include at least one of encoding, word segmentation, processing of using a rule model and dictionary matching processing.

The embodiment of the present disclosure provides a computer device, and FIG. 24 is a schematic structural diagram of a computer device in an embodiment of the present disclosure. The computer device includes: a memory configured to store a computer program; a processor configured to implement the steps of the method for constructing the knowledge graph as described above when the computer program stored in the memory is executed. The processor may be a central processing unit (CPU) or other form of processing unit having data processing capabilities and/or instruction execution capabilities, and may control other components in the computer to perform desired functions. The memory may include one or more computer program products, which may include various forms of computer-readable storage media, such as volatile memory and/or non-volatile memory. The volatile memory may include, for example, random access memory (RAM) and/or cache memory (cache) and the like. The non-volatile memory may include, for example, read only memory (ROM), hard disk, flash memory, and the like. One or more computer program instructions may be stored on the computer-readable storage media, which may be executed by the processor to implement the method steps and/or other desired functions of the above various embodiments of the present application.

The embodiments of the present disclosure provide a computer-readable storage medium on which computer program instructions are stored, and the computer program instructions, when executed by a processor, implement the steps of the above method for constructing the knowledge graph.

In addition to the above methods and apparatuses, the embodiments of the present application may also provide a computer program product, which includes computer program instructions, and the computer program instructions, when run on a computer device, may perform the method steps of the various embodiments disclosed in the present application, for example, when executed by a processor, may cause the processer to perform the method steps of various embodiments of the present disclosure.

The computer program product may write program code for performing operations of the embodiments of the present disclosure in any combination of one or more programming languages, including object-oriented programming languages, such as Java, C++, etc., also including conventional procedural programming languages, such as "C" language or similar programming languages. The program code may execute entirely on a user computing device, partly on the user device, as a stand-alone software package, partly on the user computing device and partly on a remote computing device, or entirely on the remote computing device or server.

In addition, the embodiments of the present application may also be computer-readable storage media on which computer program instructions are stored, and the computer program instructions, when executed by the processor, cause a processor to execute the method steps of the various embodiments of the present application.

The computer-readable storage medium may employ any combination of one or more readable media. The readable storage medium may be a readable signal medium or a readable storage medium. The readable storage medium may include, for example, but not limited to, electrical, magnetic, optical, electromagnetic, infrared, or semiconductor systems, apparatuses or devices, or a combination of any of the above. More specific examples (non-exhaustive) of the readable storage media include: electrical connection with one or more wires, portable disks, hard disk, random access memory (RAM), read only memory (ROM), erasable programmable read only memory (EPROM or flash memory), optical fiber, portable compact disk read only memory (CD-ROM), optical storage device, magnetic storage device, or any suitable combination of the above.

### Industrial Applicability:

The present disclosure provides a method for constructing a knowledge graph, including: acquiring an original information data set uploaded through a data upload port; outputting a part of information data in the original information data set to a user through a manual annotation interface, and acquiring first annotation result data completed by the user on the manual annotation interface; training a knowledge acquisition model based on the first annotation result data to obtain a knowledge acquisition model that satisfies a preset condition; extracting first graph knowledge from the original information data set by using the knowledge acquisition model; constructing a knowledge graph based on the first graph knowledge.

And another method for constructing a knowledge graph is provided, including: acquiring definition information of knowledge graph, acquiring an original information data set; extracting graph knowledge from the original information data set by using a knowledge acquisition model based on the definition information of knowledge graph; converting the graph knowledge extracted by using the knowledge acquisition model into a question to be confirmed, and pushing the question to at least one user for answering; constructing the knowledge graph based on answering results of the user

The above technical solution obtains the first annotation result data by manual annotation firstly, then trains the knowledge acquisition model based on the first annotation result data to obtain the knowledge acquisition model that satisfies the preset condition, and finally extracts the first graph knowledge from the original information data set based on the above knowledge acquisition model, and constructs the knowledge graph based on the first graph knowledge, thereby proposing a graph knowledge extraction solution that combines manual annotation and model extraction, wherein the manual annotation process may be completed by experts, and the knowledge acquisition model that satisfies the preset condition is obtained by training based on high-accuracy results of manual annotation, which can reduce the difficulty of constructing the knowledge graph, lower the threshold for constructing the knowledge graph, improve the efficiency of constructing the knowledge graph, and improve the experience of the knowledge graph construction process. Secondly, the above technical solution converts the graph knowledge extracted by using the knowledge acquisition model into questions to be confirmed, pushes the questions to be confirmed to the user for answering, and constructs the knowledge graph based on the answering results of the user, thereby proposing a knowledge graph construction method of using the question-and-answer method for knowledge annotation. On one hand, the above technical solution of the embodiments of the present disclosure asks the graph knowledge to the user in the form of the question to be confirmed, which can reduce the difficulty for the user to annotate the knowledge, so that it does not require the excessive participation of professional NLP experts or knowledge graph experts, thereby reducing the difficulty of constructing the knowledge graph; on the other hand, the above technical solution is to use the knowledge acquisition model to extract the graph knowledge in combination with the way of ordinary users to answer, which reduces the user requirements, so that the required user resources may be found in a variety of ways, it may also improve the efficiency of constructing the knowledge graph and have strong industrial practicability.

## Claims

1. A method for constructing a knowledge graph, comprising:
acquiring an original information data set uploaded through a data upload port;
outputting a part of information data in the original information data set to a user through a manual annotation interface, and acquiring first annotation result data completed by the user on the manual annotation interface;
training a knowledge acquisition model based on the first annotation result data to obtain a knowledge acquisition model that satisfies a preset condition;
extracting first graph knowledge from the original information data set by using the knowledge acquisition model;
constructing a knowledge graph based on the first graph knowledge.

2. The method according to claim 1, wherein before the outputting the part of information data in the original information data set to the user through the manual annotation interface, the method further comprises:
providing a graph configuration interface and acquiring definition information of the knowledge graph input through the graph configuration interface;
the extracting the first graph knowledge from the original information data set by using the knowledge acquisition model comprises:
extracting the first graph knowledge that matches the definition information of the knowledge graph from the original information data set by using the knowledge acquisition model, based on the definition information of the knowledge graph.

3. The method according to claim 2, wherein the manual annotation interface is provided with an annotation prompt control that matches the definition information of the knowledge graph, and an annotation is made by the user on the manual annotation interface based on the annotation prompt control.

4. The method according to claim 1, wherein the constructing the knowledge graph based on the first graph knowledge comprises:
converting the extracted first graph knowledge into a question to be confirmed, and pushing, through a preset channel, the question to at least one user for answering;
constructing the knowledge graph based on answering results of the user.

5. The method according to claim 4, wherein the method further comprises:
obtaining second annotation result data based on the answering results of the user;
performing optimization training on the knowledge acquisition model based on the second annotation result data to obtain an optimized knowledge acquisition model ;
converting first graph knowledge extracted by the optimized knowledge acquisition model into a question to be confirmed, and pushing the question to the at least one user for answering.

6. The method according to claim 5, wherein the knowledge graph is constructed directly based on the first graph knowledge in a case where it is determined based on the answering results of the user that a performance parameter value of the first graph knowledge extracted from the original information data set by using the knowledge acquisition model is greater than or equal to a first preset threshold.

7. The method according to claim 4, wherein the converting the extracted first graph knowledge into the question to be confirmed, and pushing, through the preset channel, the question to the at least one user for answering comprises:
providing a user answering interface, and displaying the question to be confirmed and an answer submission control on the user answering interface.

8. The method according to claim 7, wherein the method further comprises:
displaying, on the user answering interface, source information data of the first graph knowledge corresponding to the question to be confirmed, and/or,
displaying, on the user answering interface, the knowledge graph created based on the first graph knowledge corresponding to the question to be confirmed.

9. The method according to claim 7, wherein at least two questions to be confirmed are displayed on the user answering interface, and the answer submission control comprises a batch selection control.

10. The method according to claim 9, wherein the batch selection control comprises at least one of a select-all control, an all-deselection control, an inverse-selection control and a partial multiple-selection control.

11. The method according to claim 4, wherein the first graph knowledge comprises at least one of an entity type, a relationship type and an event type;
the method further comprises:
acquiring a priority of first graph knowledge of each type input through a graph construction overview interface;
the pushing, through the preset channel, the question to the at least one user for answering comprising:
pushing, through the preset channel, the question to be confirmed corresponding to the first graph knowledge of each type based on the priority.

12. The method according to claim 11, wherein the method further comprises:
acquiring performance parameter information of the knowledge acquisition model, and displaying it on the graph construction overview interface, wherein the performance parameter information comprises at least one of an accuracy, a recall and a F1; and/or,
acquiring construction information of the first graph knowledge of each type of the knowledge graph, and displaying it on the graph construction overview interface, wherein the construction information comprises a constructor, a number of times of construction, and a construction accuracy.

13. The method according to claim 1, wherein the training the knowledge acquisition model based on the first annotation result data to obtain the knowledge acquisition model that satisfies the preset condition comprises:
training the knowledge acquisition model based on the first annotation result;
for the same part of information data in the original information data set, acquiring second graph knowledge by using the knowledge acquisition model and acquiring third annotation result data through the manual annotation interface, respectively;
determining that the knowledge acquisition model satisfies the preset condition in a case where it is determined based on the second graph knowledge and the third annotation result data that a performance parameter value of the knowledge acquisition model is greater than or equal to a second preset threshold.

14. The method according to claim 13, wherein the method further comprises:
continuing to perform optimization training on the knowledge acquisition model based on the third annotation result data in a case where it is determined based on the second graph knowledge and the third annotation result data that the performance parameter value of the knowledge acquisition model is less than the second preset threshold.

15. The method according to claim 1, wherein the acquiring the original information data set uploaded through the data upload port comprises:
providing a data upload interface;
acquiring the original information data set uploaded through the data upload interface, wherein the original information data set comprises at least one of an original corpus data set, an original picture data set and an original video data set, and the original corpus data set comprises unstructured text data.

16. The method according to claim 1, wherein the method further comprises:
acquiring structured data uploaded through the data upload port;
constructing the knowledge graph based on graph knowledge in the structured data.

17. The method according to claim 16, wherein the acquiring the structured data uploaded through the data upload port comprises:
providing a data upload interface, and acquiring the structured data uploaded through the data upload interface, and acquiring fields in structured data corresponding to a type of graph knowledge in the knowledge graph.

18. An apparatus for constructing a knowledge graph, comprising:
a first acquisition module configured to acquire an original information data set uploaded through a data upload port;
a second acquisition module configured to output a part of information data in the original information data set to a user through a manual annotation interface, and acquire first annotation result data completed by the user on the manual annotation interface;
a model training module configured to train a knowledge acquisition model based on the first annotation result data to obtain a knowledge acquisition model that satisfies a preset condition;
a knowledge extraction module configured to extract first graph knowledge from the original information data set by using the knowledge acquisition model;
a graph construction module configured to construct a knowledge graph based on the first graph knowledge.

19. The apparatus according to claim 18, further comprising:
a third acquisition module configured to provide a graph configuration interface and acquire definition information of the knowledge graph input through the graph configuration interface;
the knowledge extraction module is specifically configured to extract the first graph knowledge that matches the definition information of the knowledge graph from the original information data set by using the knowledge acquisition model, based on the definition information of the knowledge graph.

20. The apparatus according to o claim 19, wherein the manual annotation interface is provided with an annotation prompt control that matches the definition information of the knowledge graph, and an annotation is made by the user on the manual annotation interface based on the annotation prompt control.

21. The apparatus according to claim 18, wherein the graph construction module is specifically configured to convert the extracted first graph knowledge into a question to be confirmed, and push, through a preset channel, the question to at least one user for answering; and construct the knowledge graph based on answering results of the user.

22. The apparatus according to claim 21, wherein the apparatus further comprises:
a fourth acquisition module configured to obtain second annotation result data based on the answering results of the user;
an optimization training module configured to perform optimization training on the knowledge acquisition model based on the second annotation result data to obtain an optimized knowledge acquisition model;
the graph construction module is specifically configured to convert first graph knowledge extracted by the optimized knowledge acquisition model into a question to be confirmed, and push the question to the at least one user for answering.

23. The apparatus according to claim 22, wherein the graph construction module is specifically configured to construct the knowledge graph directly based on the first graph knowledge in a case where it is determined based on the answering results of the user that a performance parameter value of the first graph knowledge extracted from the original information data set by using the knowledge acquisition model is greater than or equal to a first preset threshold.

24. The apparatus according to claim 21, wherein the graph construction module is specifically configured to provide a user answering interface, and display the question to be confirmed and an answer submission control on the user answering interface.

25. The apparatus according to claim 24, wherein the graph construction module is further configured to display, on the user answering interface, source information data of the first graph knowledge corresponding to the question to be confirmed, and/or display, on the user answering interface, the knowledge graph created based on the first graph knowledge corresponding to the question to be confirmed

26. The apparatus according to claim 24, wherein the graph construction module is further configured to display at least two questions to be confirmed on the user answering interface, the answer submission control comprises a batch selection control.

27. The apparatus according to claim 26, wherein the batch selection control comprises at least one of a select-all control, an all-deselection control, an inverse-selection control and a partial multiple-selection control.

28. The apparatus according to claim 21, wherein the first graph knowledge comprises at least one of an entity type, a relationship type and an event type; the apparatus further comprises:
a fifth acquisition module configured to acquire a priority of first graph knowledge of each type input through a graph construction overview interface;
the graph construction module is specifically configured to push, through the preset channel, the question to be confirmed corresponding to the first graph knowledge of each type based on the priority.

29. The apparatus according to claim 28, wherein the fifth acquisition module is further configured to acquire performance parameter information of the knowledge acquisition model, and display it on the graph construction overview interface, wherein the performance parameter information comprises at least one of an accuracy, a recall and a F 1; and/or, acquire construction information of the first graph knowledge of each type of the knowledge graph, and display it on the graph construction overview interface, wherein the construction information comprises a constructor, a number of times of construction, and a construction accuracy.

30. The apparatus according to claim 18, wherein the model training module is specifically configured to train the knowledge acquisition model based on the first annotation result; for the same part of information data in the original information data set, acquire second graph knowledge by using the knowledge acquisition model and acquire third annotation result data through the manual annotation interface, respectively; determine that the knowledge acquisition model satisfies the preset condition in a case where it is determined based on the second graph knowledge and the third annotation result data that a performance parameter value of the knowledge acquisition model is greater than or equal to a second preset threshold.

31. The apparatus according to claim 30, wherein the model training module is further configured to continue to perform optimization training on the knowledge acquisition model based on the third annotation result data in a case where it is determined based on the second graph knowledge and the third annotation result data that the performance parameter value of the knowledge acquisition model is less than the second preset threshold.

32. The apparatus according to claim 18, wherein the first acquisition module is specifically configured to provide a data upload interface and acquire the original information data set uploaded through the data upload interface, wherein the original information data set comprises at least one of an original corpus data set, an original picture data set and an original video data set, and the original corpus data set comprises unstructured text data..

33. The apparatus according to claim 18, further comprising:
a sixth acquisition model configured to acquire structured data uploaded through the data upload port;
the graph construction module is specifically configured to construct the knowledge graph based on graph knowledge in the structured data.

34. The apparatus according to claim 33, wherein the sixth acquisition module is specifically configured to provide a data upload interface, obtain structured data uploaded through the data upload interface, and acquire the structured data uploaded through the data upload interface, and acquire fields in structured data corresponding to a type of graph knowledge in the knowledge graph.

35. A method for constructing a knowledge graph, comprising:
acquiring an original information data set;
extracting graph knowledge from the original information data set by using a knowledge acquisition model;
converting the graph knowledge extracted by using the knowledge acquisition model into a question to be confirmed, and pushing the question to at least one user for answering;
constructing the knowledge graph based on answering results of the user.

36. The method according to claim 35, wherein before the extracting the graph knowledge from the original information data set by using the knowledge acquisition model, the method further comprises:
acquiring definition information of the knowledge graph;
the extracting the graph knowledge from the original information data set by using the knowledge acquisition model comprises:
extracting the graph knowledge from the original information data set by using the knowledge acquisition model, based on the definition information of the knowledge graph.

37. The method according to claim 35, wherein the method further comprises:
generating optimization training data based on the answering results of the user;
performing optimization training on the knowledge acquisition model based on the optimization training data to obtain an optimized knowledge acquisition model;
converting graph knowledge extracted by using the optimized knowledge acquisition model into a question to be confirmed, and pushing the question to the at least one user for answering.

38. The method according to claim 35, wherein the method further comprises:
constructing the knowledge graph directly based on the graph knowledge extracted by using the knowledge acquisition model in a case where it is determined based on the answering results of the user that a performance parameter value of the graph knowledge extracted from the original information data set by using the knowledge acquisition model is greater than or equal to a preset threshold.

39. The method according to claim 36, wherein the acquiring the definition information of the knowledge graph comprises:
acquiring at least one of entity type definition information, event type definition information and relationship type definition information of the knowledge graph;
the extracting the graph knowledge from the original information data set by using the knowledge acquisition model comprises:
extracting at least one of graph knowledge of an entity type, graph knowledge of an event type, and graph knowledge of a relationship type from the original information data set by using the knowledge acquisition model.

40. The method according to claim 39, wherein the knowledge acquisition model comprises at least one of a rule model, a dictionary model, a statistical learning model, a machine learning model, and a language model.

41. The method according to claim 39, wherein the extracting the at least one of the graph knowledge of the entity type, the graph knowledge of the event type, and the graph knowledge of the relationship type from the original information data set by using the knowledge acquisition model comprises at least one of:
extracting the graph knowledge of the entity type from the original information data set by using at least one knowledge acquisition model of the entity type;
extracting the graph knowledge of the event type from the original information data set by using at least one knowledge acquisition model of the event type;
extracting the graph knowledge of the relationship type from the original information data set by using at least one knowledge acquisition model of the relationship type.

42. The method according to claim 41, wherein the graph knowledge output by any one of the knowledge acquisition model of the entity type, the knowledge acquisition model of the event type and the knowledge acquisition model of the event type is used as input data of one or two of the other knowledge acquisition models.

43. The method according to claim 41, wherein the extracting the graph knowledge of the entity type from the original information data set by using the at least one knowledge acquisition model of the entity type comprises:
extracting graph knowledge of a character entity type from the original information data set by using at least one of an available rule model, an available bert language model, an available LSTM+CRF language model and an available few-shot language model.

44. The method according to claim 39, wherein the method further comprises:
extracting the graph knowledge of the entity type from the graph knowledge of the relationship type, and/or, extracting the graph knowledge of the entity type and the graph knowledge of the relationship type from the graph knowledge of the event type;
classifying and collecting the graph knowledge of the entity type, the graph knowledge of the relationship type and the graph knowledge of the event type according to types.

45. The method according to claim 44, wherein the method further comprises:
performing merge fusion processing on the graph knowledge of each type obtained by the classifying and collecting, and/or, performing selection filtering processing on the graph knowledge obtained by the classifying and collecting.

46. The method according to claim 35, wherein the converting the graph knowledge extracted by using the knowledge acquisition model into the question to be confirmed, and pushing the question to the at least one user for answering comprises:
generating a question pool based on the question to be confirmed;
extracting a question to be confirmed from the question pool in a preset order, and pushing the question to the at least one user for answering.

47. The method according to claim 46, wherein the extracting the question to be confirmed from the question pool in the preset order, and pushing the question to the at least one user for answering comprises at least one of:
extracting the question to be confirmed from the question pool based on a learning model, and pushing the question to the at least one user for answering;
extracting the question to be confirmed from the question pool based on a preset priority and/or a performance parameter value indicator, and pushing the question to the at least one user for answering;
extracting the question to be confirmed from the question pool based on a correlation of the graph knowledge, and pushing the question to the at least one user for answering;
extracting the question to be confirmed from the question pool based on a granularity of data in the original information data set, and pushing the question to the at least one user for answering.

48. The method according to claim 35, wherein the pushing the question to the at least one user for answering comprises:
pushing the question to the at least one user for answering by at least one of a text method, an image method or a voice broadcast method;
the method further comprises:
acquiring the answering results of the user by any one of a keyboard method, a mouse input method, a touch input method, a voice input method or a somatosensory input method.

49. The method according to claim 35, wherein the pushing the question to the at least one user for answering comprises at least one of:
pushing the question to be confirmed to a shared learning platform;
pushing the question to be confirmed to a login verification platform;
pushing the question to be confirmed to an operation platform, wherein the operation platform comprises at least one of a customer service system platform, an evaluation system platform, and a crowdsourcing platform.

50. The method according to claim 35, wherein the constructing the knowledge graph according to the answering results of the user comprises:
determining whether a preset confirmation condition is satisfied based on the answering results of the user, and constructing the knowledge graph according to graph knowledge corresponding to the answering results in a case where it is determined that the preset confirmation condition is satisfied.

51. The method according to claim 50, wherein the answering results of the user comprises a confirmation type result and a deny type result;
the determining whether the preset confirmation condition is satisfied based on the answering results of the user comprises:
determining whether the preset confirmation condition is satisfied, based on a number of confirmation type results and/or a number of deny type results.

52. The method according to claim 51, wherein the preset confirmation condition comprises a first accuracy confirmation condition and a second accuracy confirmation condition, and quantity requirements of the first accuracy confirmation condition and the second accuracy confirmation condition are different.

53. The method according to claim 50, wherein the constructing the knowledge graph according to the graph knowledge corresponding to the answering results comprises:
constructing entity nodes in the knowledge graph according to graph knowledge of an entity type;
constructing entity nodes that do not exist in the knowledge graph and constructing relational relationship edges according to graph knowledge of a relationship type;
constructing entity nodes that do not exist in the knowledge graph and constructing event nodes and events centered on the event nodes according to graph knowledge of an event type.

54. The method according to claim 35, wherein the original information data set comprises at least one of an original corpus data set, an original picture data set and an original video data set;
wherein the acquiring the original corpus data set comprises:
acquiring unstructured text data;
pre-processing the unstructured text data, the pre-processing method comprises at least one of encoding, word segmentation, processing of using a rule model and dictionary matching processing.

55. An apparatus for constructing a knowledge graph, comprising:
a second acquisition module configured to acquire an original information data set;
an extraction module configured to extract graph knowledge from the original information data set by using a knowledge acquisition model;
a push module configured to convert the graph knowledge extracted by using the knowledge acquisition model into a question to be confirmed, and push the question to at least one user for answering;
a construction module configured to construct the knowledge graph based on answering results of the user.

56. The apparatus according to claim 55, further comprising:
a first acquisition module configured to acquire definition information of the knowledge graph;
the extraction module is configured to extract the graph knowledge from the original information data set by using the knowledge acquisition model, based on the definition information of the knowledge graph.

57. The apparatus according to claim 55, further comprising:
a training data generation module configured to generate optimization training data based on the answering results of the user;
a training module configured to perform optimization training on the knowledge acquisition model based on the optimization training data to obtain an optimized knowledge acquisition model;
the push module is further configured to convert graph knowledge extracted by using the optimized knowledge acquisition model into a question to be confirmed, and push the question to the at least one user for answering.

58. The apparatus according to claim 55, wherein the construction module is further configured to construct the knowledge graph directly based on the graph knowledge extracted by using the knowledge acquisition model in a case where it is determined based on the answering results of the user that a performance parameter value of the graph knowledge extracted from the original information data set by using the knowledge acquisition model is greater than or equal to a preset threshold.

59. The apparatus according to claim 55, wherein the first acquisition module is configured to acquire at least one of entity type definition information, event type definition information and relationship type definition information of the knowledge graph;
the extraction module is configured to extract at least one of graph knowledge of an entity type, graph knowledge of an event type, and graph knowledge of a relationship type from the original information data set by using the knowledge acquisition model.

60. The apparatus according to claim 59, wherein the knowledge acquisition model comprises at least one of a rule model, a dictionary model, a statistical learning model, a machine learning model, and a language model.

61. The apparatus according to claim 59, wherein the extraction module is configured to perform at least one of:
extracting the graph knowledge of the entity type from the original information data set by using at least one knowledge acquisition model of the entity type;
extracting the graph knowledge of the event type from the original information data set by using at least one knowledge acquisition model of the event type;
extracting the graph knowledge of the relationship type from the original information data set by using at least one knowledge acquisition model of the relationship type.

62. The apparatus according to claim 61, wherein the graph knowledge output by any one of the knowledge acquisition model of the entity type, the knowledge acquisition model of the event type and the knowledge acquisition model of the event type is used as input data of one or two of the other knowledge acquisition models.

63. The apparatus according to claim 61, wherein the extraction module extracts the graph knowledge of the entity type from the original information data set by using at least one knowledge acquisition model of the entity type, comprising:
extracting graph knowledge of a character entity type from the original information data set by using at least one of an available rule model, an available bert language model, an available LSTM+CRF language model and an available few-shot language model.

64. The apparatus according to claim 59, wherein the extraction module is configured to extract the graph knowledge of the entity type from the graph knowledge of the relationship type, and/or extract the graph knowledge of the entity type and the graph knowledge of the relationship type from the graph knowledge of the event type;
the apparatus further comprises a collection module configured to classify and collect the graph knowledge of the entity type, the graph knowledge of the relationship type and the graph knowledge of the event type according to types.

65. The apparatus according to claim 64, wherein the collection module is further configured to perform merge fusion processing on the graph knowledge of each type obtained by the classifying and collecting, and/or perform selection filtering processing on the graph knowledge obtained by the classifying and collecting.

66. The apparatus according to claim 55, wherein the push module is configured to generate a question pool based on the question to be confirmed; extract a question to be confirmed from the question pool in a preset order, and push the question to the at least one user for answering.

67. The apparatus according to claim 66, wherein the push module is configured to perform at least one of:
extracting the question to be confirmed from the question pool based on a learning model, and pushing the question to the at least one user for answering;
extracting the question to be confirmed from the question pool based on a preset priority and/or a performance parameter value indicator, and pushing the question to the at least one user for answering;
extracting the question to be confirmed from the question pool based on a correlation of the graph knowledge, and pushing the question to the at least one user for answering;
extracting the question to be confirmed from the question pool based on a granularity of data in the original information data set, and pushing the question to the at least one user for answering.

68. The apparatus according to claim 55, wherein the push module is configured to push the question to the at least one user for answering by at least one of a text method, an image method or a voice broadcast method;
the apparatus further comprises:
an input module configured to acquire the answering results of the user by any one of a keyboard method, a mouse input method, a touch input method, a voice input method or a somatosensory input method.

69. The apparatus according to claim 55, wherein the push module is configured to perform at least one of:
pushing the question to be confirmed to a shared learning platform;
pushing the question to be confirmed to a login verification platform;
pushing the question to be confirmed to an operation platform, wherein the operation platform comprises at least one of a customer service system platform, an evaluation system platform, and a crowdsourcing platform.

70. The apparatus according to claim 55, wherein the construction module is configured to determine whether a preset confirmation condition is satisfied based on the answering results of the user, and construct the knowledge graph according to graph knowledge corresponding to the answering results in a case where it is determined that the preset confirmation condition is satisfied.

71. The apparatus according to claim 70, wherein the answering results of the user comprises a confirmation type result and a deny type result;
the determining whether the preset confirmation condition is satisfied based on the answering results of the user comprises:
determining whether the preset confirmation condition is satisfied, based on a number of confirmation type results and/or a number of deny type results.

72. The apparatus according to claim 71, wherein the preset confirmation condition comprises a first accuracy confirmation condition and a second accuracy confirmation condition, and quantity requirements of the first accuracy confirmation condition and the second accuracy confirmation condition are different.

73. The apparatus according to claim 70, wherein the construction module is specifically configured to construct entity nodes in the knowledge graph according to graph knowledge of an entity type; construct entity nodes that do not exist in the knowledge graph and construct relational relationship edges according to graph knowledge of a relationship type; construct entity nodes that do not exist in the knowledge graph and construct event nodes and events centered on the event nodes according to graph knowledge of an event type.

74. The apparatus according to claim 55, wherein the second acquisition module is configured to acquire unstructured text data; pre-process the unstructured text data, the pre-processing method comprises at least one of encoding, word segmentation, processing of using a rule model and dictionary matching processing.

75. A computer device comprising:
a memory configured to store a computer program;
a processor configured to implement a step of a method according to any one of claims 1-17 or claims 35-54 when executing the computer program stored in the memory.

76. A computer-readable storage medium having stored thereon computer instructions which, when executed by a processor, implement a step of a method according to any one of claims 1-17 or 35-54.

77. A computer program product comprising computer program instructions which, when run on a computer device, implement a step of a method of any one of claims 1-17 or claims 35-54.
